(19) Europäisches Patentamt
European Patent Office
Office européen des brevets

(11) **EP 1 177 644 B1**

(12) **EUROPEAN PATENT SPECIFICATION**

(45) Date of publication and mention
of the grant of the patent:
**23.04.2008 Bulletin 2008/17**

(51) Int Cl.:
***H04B 7/185*** (2006.01)        ***H04B 7/204*** (2006.01)

(21) Application number: **00930387.6**

(22) Date of filing: **03.05.2000**

(86) International application number:
**PCT/US2000/012276**

(87) International publication number:
**WO 2000/067397 (09.11.2000 Gazette 2000/45)**

(54) **METHOD AND APPARATUS FOR MINIMIZING THE NUMBER OF CHANNELS USED IN PAGING**

VERFAHREN UND GERÄT ZUR BESCHRÄNKUNG DER ZAHL DER VERWENDETEN PAGINGFUNKKANÄLE

PROCEDE ET APPAREIL PERMETTANT DE REDUIRE LE NOMBRE DE CANAUX UTILISES POUR LE TELEAPPEL

(84) Designated Contracting States:
**AT BE CH CY DE DK ES FI FR GB GR IE IT LI LU MC NL PT SE**

(30) Priority: **04.05.1999 US 305180**

(43) Date of publication of application:
**06.02.2002 Bulletin 2002/06**

(73) Proprietor: **QUALCOMM INCORPORATED**
**San Diego, CA 92121-1714 (US)**

(72) Inventor: **SCHIFF, Leonard, N.**
**San Diego, CA 92130 (US)**

(74) Representative: **Dunlop, Hugh Christopher et al**
**R.G.C. Jenkins & Co.**
**26 Caxton Street**
**London SW1H 0RJ (GB)**

(56) References cited:
**WO-A-97/38500**        **US-A- 5 506 886**
**US-A- 5 552 795**        **US-A- 5 721 534**

• **MEENAN C ET AL: "Intelligent paging schemes for non-GEO satellite personal communication networks" 1997 IEEE 47TH VEHICULAR TECHNOLOGY CONFERENCE. TECHNOLOGY IN MOTION (CAT. NO.97CH36003), 1997 IEEE 47TH VEHICULAR TECHNOLOGY CONFERENCE. TECHNOLOGY IN MOTION, PHOENIX, AZ, USA, 4-7 MAY 1997, pages 515-519 vol.2, XP002145665 1997, New York, NY, USA, IEEE, USA ISBN: 0-7803-3659-3**

## Description

## BACKGROUND OF THE INVENTION

### I. Field of the Invention

The present invention relates generally to satellite communication systems, and more particularly, to a method and apparatus for paging a user terminal using a single paging channel of a single beam.

### II. Related Art

Conventional satellite-based communication systems include gateways and one or more satellites to relay communication signals between the gateways and one or more user terminals. A gateway is an earth station having an antenna for transmitting signals to, and receiving signals from, communication satellites. A gateway provides communication links, using satellites, for connecting a user terminal to other user terminals or users of other communication systems, such as a public switched telephone network. A satellite is an orbiting receiver, repeater and regenerator used to relay information signals. A user terminal is a wireless communication device such as, but not limited to, a wireless telephone, a data transceiver, and a paging receiver. A user terminal can be fixed, portable, or mobile, such as a mobile telephone.

A satellite can receive signals from and transmit signals to a user terminal provided the user terminal is within the "footprint" of the satellite. The footprint of a satellite is the geographic region on the surface of the Earth within the range of signals of the satellite. The footprint is usually geographically divided into "beams," through the use of beam-forming antennas. Each beam covers a particular geographic region within the footprint. Beams may be directed so that more than one beam from the same satellite covers the same specific geographic region.

Some satellite communications systems employ code division multiple access (CDMA) spread-spectrum signals, as disclosed in U.S. Patent No. 4,901,307, issued February 13, 1990, entitled *"Spread Spectrum Multiple Access Communication System Using Satellite or Terrestrial Repeaters,"* and U.S. Patent Application Serial No. 08/368,570, filed January 4, 1995, entitled *"Method and Apparatus for Using Full Spectrum Transmitted Power in a Spread Spectrum Communication System for Tracking Individual Recipient Phase Time and Energy,"* both of which are assigned to the assignee of the present invention.

In satellite communication systems employing CDMA, separate communication links are used to transmit communication signals, such as data or traffic, to and from a gateway. The term "forward communication link" refers to communication signals originating at the gateway and transmitted to a user terminal. The term "reverse communication link" refers to communication signals originating at a user terminal and transmitted to the gateway.

On the forward link, information is transmitted from a gateway to a user terminal over one or more beams. These beams often comprise a number of so-called subbeams (also referred to as frequency division multiple access (FDMA) channels) covering a common geographic area, each occupying a different frequency band. More specifically, in a conventional spread-spectrum communication system, one or more preselected pseudorandom noise (PN) code sequences are used to modulate or "spread" user information signals over a predetermined spectral band prior to modulation onto a carrier signal for transmission as communication signals. PN spreading is a method of spread-spectrum transmission that is well known in the art, and produces a communication signal with a bandwidth much greater than that of the data signal. On the forward link, PN spreading codes or binary sequences are used to discriminate between signals transmitted by different gateways or over different beams, as well as between multipath signals. These codes are often shared by all communication signals within a given subbeam.

In a conventional CDMA spread-spectrum communication system, "channelizing" codes are used to discriminate between different user terminals within a satellite sub-beam on a forward link (sometimes referred to as CDMA channels). That is, each user terminal has its own orthogonal channel provided on the forward link by using a unique channelizing orthogonal code. Walsh functions are generally used to implement the channelizing codes, also known as Walsh codes. The channelizing codes divide a subbeam into orthogonal channels, also known as Walsh channels. A majority of the Walsh channels are traffic channels that provide messaging between a user terminal and a gateway. The remaining Walsh channels often include pilot, sync, and paging channels. Signals sent over the traffic channels are meant to be received by only one user terminal. In contrast, paging, sync, and pilot channels may be monitored by multiple user terminals.

When a user terminal is not involved in a communications session (that is, the user terminal is not receiving or transmitting traffic signals), the gateway can convey information to that particular user terminal using a signal known as a paging signal (also referred to herein as a page). Paging signals are often sent by the gateway to establish a communication link, to tell a user terminal that a call is coming in, to reply to a user terminal trying to access the system, and for registration of the user terminal. For example, when a call has been placed to a particular user terminal, the gateway alerts the user terminal by means of a paging signal. Additionally, if the gateway is sending a short message to a user terminal, such as a request for a location update of the user terminal, the gateway can send such a request by means of a paging signal. Paging signals are also used to distribute channel assignments and system overhead information. Paging signals are usually transmitted over paging channels, which are briefly discussed above. Each paging signal includes an identity number so that the user terminals listening to the paging channel know if the paging signal is addressed to them. If a paging signal is meant for multiple user terminals, the paging signal includes an identity number that corresponds to the multiple user terminals.

A user terminal can respond to a paging signal by sending an access signal or access probe over the reverse link (that is, the communications link originating at the user terminal and terminating at the gateway). The access signal is also used to register with a gateway, to originate a call, or to acknowledge a paging request by a gateway. The access signal is usually transmitted over channels specifically designated as access channels, which are briefly discussed above. The reverse link also includes traffic channels for providing messaging between a user terminal and a gateway.

US 5,552,795 describes a method and system for performing location determination using multi-beam satellites, in which a user terminal processes multiple received signals from orbiting satellites. The user terminal determines its current location and compares this with its previously registered location, when the terminal has sufficiently roamed from its previously registered location the user terminal performs an auto registration procedure by notifying the satellite system of its current location.

US 5,506,886 describes a paging system that includes a number of spaced-apart transmitters, in which each transmitter has its own area of coverage, and numerous subscriber units roaming between the coverage areas. As each subscriber unit roams, a call can be placed from the subscriber unit to a destination controller via a public switch telecommunication network. New location data is transferred from the subscriber unit to the paging system during this call, in which the location data is used internally by the system to route pages to only the transmitters whose areas correspond to the subscriber station's new location data.

If a user terminal is merely sending a location update in response to a location update request that is received from a gateway over a paging channel, the user terminal may send location update information as an access probe over an access channel. By using paging channels and access channels to convey short messages (such as location update requests and location update information), forward and reverse traffic channels are reserved for longer communications such as voice calls.

When a gateway sends a paging signal to a user terminal, the gateway usually does not know the location of the user terminal. Therefore, in contemporary satellite communications systems, the gateway usually sends a paging signal over many paging channels, one in each of several beams. At worst, the gateway sends the paging signal over every paging channel in every beam that is supported by the gateway serving the particular user terminal. It is generally not necessary to use a paging channel in every subbeam, as subbeam monitoring assignments within beams are usually known in advance, although this can be done as desired. This sending of a paging signal over many paging channels is often referred to as flood paging. Flood paging, though inefficient and wasteful, is relatively inexpensive when used to set up voice calls. This is because the resources used to flood page are relatively small compared to the resources used for a typical two or three minute voice call. More specifically, the total capacity and power used to flood page is relatively small compared to the total power and capacity used to support the voice call. Thus, flood paging, though not efficient, has proven useful in voice systems. However, flood paging may become unacceptable when used for setting up voice calls, if, for example, the number of call set up requests increases to the point where paging channel capacity becomes a scarce resource.

The inefficiencies of flood paging are not acceptable in many other types of messaging systems, such as in a position determination system where the response to a paging message may be a relatively short acknowledgment message and/or a location update message. This is because the resources used to flood page are quite large as compared to the information sent in response to the flood page. More specifically, the total power and capacity used to flood page is relatively large compared to the total power and capacity used to support the response to the flood page (for example, an acknowledgment or location update message).

An example of an industry in which position determination is particularly useful is the commercial trucking industry. In the commercial trucking industry an efficient and accurate method of vehicle position determination is in demand. With ready access to vehicle location information, a trucking company home base obtains several advantages. For example, a trucking company can keep a customer informed of location, route and estimated time of arrival of payloads. The trucking company can also use vehicle location information together with empirical data on the effectiveness of routing, thereby determining the most economically efficient routing paths and procedures.

In order to minimize the power and capacity used to track the location of a truck, a location update request can be sent to a user terminal (often referred to as a Mobile Communications Terminal or MCT in the trucking industry) within the truck periodically (for example, once every hour). To further save resources, the collection of location updates should be accomplished without utilizing traffic channels. To accomplish this, a location update request message can be sent as a paging signal over a paging channel. To further minimize the power and capacity used, the number of paging channels used to transmit the paging signal should be minimized for the reasons discussed above.

Thus, as discussed above, there is a need for a system or apparatus and method for reducing the number of paging channels used to page a user terminal. Even though the initial need for the reduction of flood paging was inspired by the reduction of flood paging in a position determination system, the system and method of the invention is useful in any type of satellite communications system that uses channels (identical to or similar to paging channels) for conveying information to a user terminal that is not involved in a communications session. For example, the invention is useful in a voice communications system that uses paging signals sent over paging channels to set up a voice call. This invention is especially useful in voice communications systems where the capacity of the paging channels is close to being exhausted due to an increasing number of call setup requests. Additionally, this invention is useful in a system where common paging channels are used for multiple applications, including but not limited to setting up voice communications and requesting location updates.

## SUMMARY OF THE INVENTION

Aspects of the invention are directed toward methods and apparatus for paging a user terminal (UT) using a satellite communications system having a gateway and one or more satellites, wherein each satellite produces a plurality of beams and each beam includes a plurality of channels, and wherein the one or more satellites produce a total number of 'm' beams. The method of the invention includes the step of recalling a location of the UT that corresponds to a known location of the UT at a time $t_1$. This could be accomplished by using a look-up table, database; or memory elements in which location information for the user terminal at different times is stored. The method also includes the step of based on the location, determining or selecting a group ($g_1$) of beams that covers the recalled location of the UT at a time $t_2$, where $g_1 < m$ and $t_2 > t_1$. A strongest beam of the group ($g_1$) of beams at time $t_2$ is then determined, by calculating the theoretical received power with respect to the recalled location. In one embodiment the strongest beam is selected by determining which beam, of the group ($g_1$) of beams, has a highest power, as determined by the gateway, relative to the recalled location at time $t_2$. A page is then sent from the gateway to the UT on a channel of the strongest beam. Accordingly, the invention can be used to page a user terminal using a single channel of a single beam.

In one embodiment of the invention the page is only sent at time $t_2$ if the strongest beam has a power, as determined by the gateway, that is at least a predetermined amount of power (for example, 3 or 4 dB) higher than each other beam of the group ($g_1$) of beams relative to the recalled location. Otherwise, a time $t_3$ is determined at which one beam covering the recalled location will have a power, as determined by the gateway, that is at least the predetermined amount of power higher than any other beam covering the recalled location. A page can then be sent over a channel of the one beam at time $t_3$.

In one embodiment of the invention, the strongest beam is determined with respect to an area within which the UT is assumed to be located at time $t_2$.

In one embodiment of the invention the UT monitors a channel of the actual strongest beam, in terms of the received power, with respect to its current location. In another embodiment, the UT monitors a channel of a theoretically strongest beam, as determined by the UT in terms of the received power with respect to its current location. In still another embodiment, the UT monitors a channel of a theoretically strongest beam, as determined by the UT in terms of the received power with respect to a recalled location. In each of these embodiments, the UT can be paged by the gateway using a single channel of a single beam.

## BRIEF DESCRIPTION OF THE DRAWINGS

The features, objects, and advantages of the preferred embodiments will become more apparent from the detailed description set forth below when taken in conjunction with the drawings in which like reference characters identify corresponding elements throughout and wherein:

FIG. 1A illustrates an exemplary wireless communication system in which the preferred embodiments are useful;
FIG. 1B illustrates exemplary communication links between a gateway and a user terminal;
FIG. 2 illustrates an exemplary transceiver for use in a user terminal;
FIG. 3 illustrates exemplary transceiver apparatus for use in a gateway;
FIG. 4 illustrates an exemplary satellite footprint;
FIGS. 5A and 5B illustrate exemplary satellite footprints at a time $t_2$;
FIGS. 6A and 6B illustrate exemplary satellite footprints at a time $t_3$;
FIGS. 7A and 7B are flowcharts depicting the high level operation of an preferred embodiments;
FIG. 8 is a flowchart depicting additional features of the operation of a preferred embodiment; and
FIGS. 9 and 10 are flowcharts depicting alternative methods performed by a user terminal in alternative embodiments.

## DETAILED DESCRIPTION OF THE PREFERRED EMBODIMENTS

### I. Introduction

The preferred embodiments are particularly suited for use in communications systems employing low Earth orbit (LEO) satellites, wherein the satellites are not stationary with respect to a point on the surface of the Earth. However, the invention is also applicable to satellite systems in which the satellites travel in non-LEO orbits, or systems using relatively high speed moving relay devices.

A preferred embodiment is discussed in detail below. While specific steps, configurations and arrangements are discussed, it should be understood that this is done for illustrative purposes only. A preferred application is in CDMA wireless spread spectrum communication systems.

## II. An Exemplary Satellite Communications System

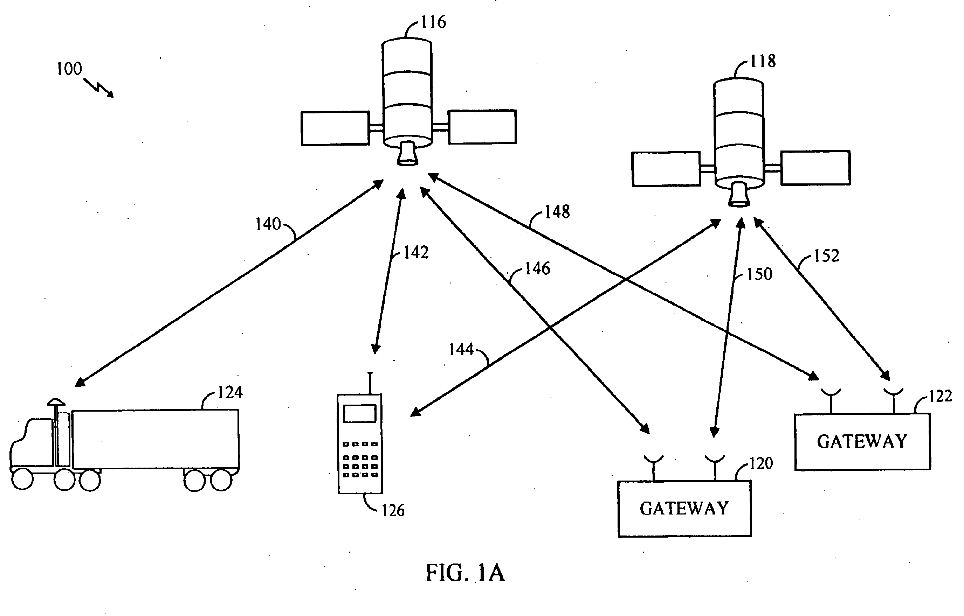

An exemplary wireless communication system in which the preferred embodiments are useful is illustrated in FIG. 1A. It is contemplated that this communication system uses CDMA type communication signals, but this is not required by the preferred embodiments. In a portion of a communication system **100** illustrated in FIG.1A , two satellites **116** and **118,** and two associated gateways, base stations, or hubs **120** and **122** are shown for effecting communications with two remote user terminals **124** and **126**. The total number of gateways and satellites in such systems depends on desired system capacity and other factors well understood in the art.

User terminals **124** and **126** each include a wireless communication device such as, but not limited to, a cellular or satellite telephone, a data transceiver, or a paging or position determination receiver, and can be hand-held or vehicle-mounted as desired. In FIG. 1A, user terminal **124** is illustrated as a vehicle mounted device and user terminal **126** is illustrated as a hand-held telephone. However, it is also understood that the teachings of the invention are applicable to fixed units where remote wireless service is desired. User terminals are sometimes also referred to as subscriber units, mobile stations, mobile units, or simply as "users" or "subscribers" in some communication systems, depending on preference.

Generally, beams from satellites **116** and **118** cover different geographical areas in predefined beam patterns. Beams at different frequencies, also referred to as FDMA channels or "sub-beams," can be directed to overlap the same region. It is also readily understood by those skilled in the art that beam coverage or service areas for multiple satellites might be designed to overlap completely or partially in a given region depending on the communication system design and the type of service being offered, and whether space diversity is being achieved.

A variety of multi-satellite communication systems have been proposed with an exemplary system employing on the order of 48 or more satellites, traveling in eight different orbital planes in LEO orbits for servicing a large number of user terminals. However, those skilled in the art will readily understand how the teachings of the preferred embodiments are applicable to a variety of satellite system and gateway configurations, including other orbital distances and constellations.

In FIG. 1A, some possible signal paths are illustrated for communications between user terminals **124** and **126** and gateways **120** and **122,** through satellites **116** and **118**. The satellite-user terminal communication links between satellites **116** and **118** and user terminals **124** and **126** are illustrated by lines **140, 142** and **144**. The gateway-satellite communication links, between gateways **120** and **122** and satellites **116** and **118,** are illustrated by lines **146, 148, 150** and **152**. Gateways **120** and **122** may be used as part of one or two-way communication systems or simply to transfer messages or data to user terminals **124** and **126**.

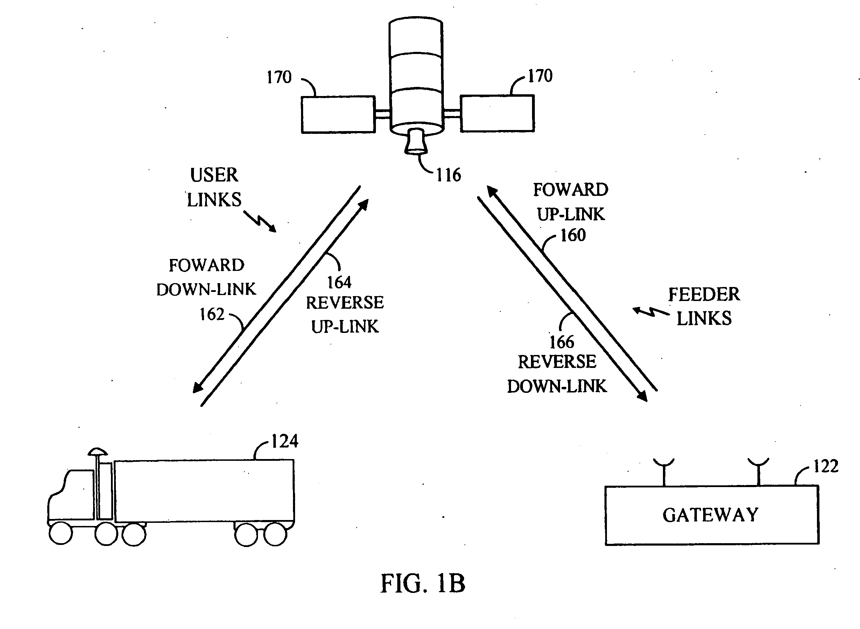

FIG. 1B provides additional details of the communications between gateway **122** and user terminal **124** of communication system **100**. Communication links between user terminal **124** and satellite **116** are generally termed user links and the links between gateway **122** and satellite **116** are generally termed feeder links. Communications proceeds in a "forward" direction from gateway **122** to satellite **116** on forward feeder link **160** and then down from satellite **116** to user terminal **124** on forward user link **162**. In a "return" or "reverse" direction, communication proceeds up from user terminal **124** to satellite **116** on reverse user link **164** and then down from satellite **116** to gateway **122** on reverse feeder link **166**.

In an example embodiment, information is transmitted by gateway **122** on forward links **160, 162** utilizing frequency division and polarization multiplexing. The frequency band used is divided up into a predetermined number of frequency "channels" or "beams." For example, the frequency band is divided into 8 individual 16.5 MHz "channels" or "beams" using right hand circular polarization (RHCP) and 8 individual 16.5 MHz "channels" or "beams" using left hand circular polarization (LHCP). These frequency "channels" or "beams" are further made up of a predetermined number of frequency division multiplexed (FDM) "subchannels" or "subbeams." For example, the individual 16.5 MHz channels may in turn be made up of up to 13 FDM "subchannels" or "subbeams", each of 1.23 MHz bandwidth. Each FDM subbeam can include multiple orthogonal channels which are generally established using Walsh codes (also referred to as Walsh channels). A majority of the orthogonal channels are traffic channels that provide messaging between user terminals **124** and gateway **122**. The remaining orthogonal channels include pilot, sync and paging channels.

The pilot channel is transmitted by gateway **122** on forward link **160, 162** and is used by user terminal **124** to obtain initial system synchronization, and time, frequency and phase tracking for acquiring transmitted signals in beams or acquire a subbeam (CDMA carrier).

The sync channel is transmitted by gateway **122** on forward link **160, 162** and includes a repeating sequence of information which user terminal **124** can read after finding a pilot channel. This information is needed to synchronize user terminal **124** to the gateway **122** assigned to that subbeam. Paging channels are often used by gateway **122** on forward link **160, 162** to establish a communication link, to tell user terminal **124** that a call is coming in, to reply to a user terminal trying to access the system, and for registration of the user terminal. Additionally, as will be explained in further detail below, paging channels can also be used for sending short messages, such as a position update request, to user terminal **124.**

The traffic channels are assigned on the forward and reverse links when a communication link is requested (for example, when a call is being placed). Messaging transfers between user terminal **124** and gateway **122** during a conventional communication link or phone call is accomplished using a traffic channel.

In the reverse direction, user terminal **124** transmits information to satellite **116** over user link **164.** Satellite **116** receives these signals from multiple user terminals (over link **164**) and frequency division multiplexes them together for the satellite-to-gateway feeder link **166.** Reverse link **164** contains traffic channels and access channels.

An access channel is used by user terminal **124** on reverse link **164, 166** to "access" gateway **122.** Access channels, which are well known in the relevant art, provide communications from a user terminal to a gateway when the user terminal is not using a traffic channel. This could be to register on the system, to establish a communication link, to place a call, or to acknowledge a page sent by gateway **122.** Additionally, as will be explained in further detail below, an access channel can also be used for sending a short message, such as a position update, from user terminal **124** to gateway **122.** One or more access channels are generally paired with a paging channel to provide a more efficient means of user terminals selecting channels to use in response to pages. In some CDMA systems, each access channel on a reverse link is distinguished by a different PN code, which may be different in length or chipping rate than other PN codes used in spreading communication signals in the communication system, as desired. User terminal **124** responds to a page message by transmitting on one of the associated access channels. Similarly, gateway **122** responds to transmission on a particular access channel by a message on the access channel's associated paging channel.

## III. User Terminal Transceiver

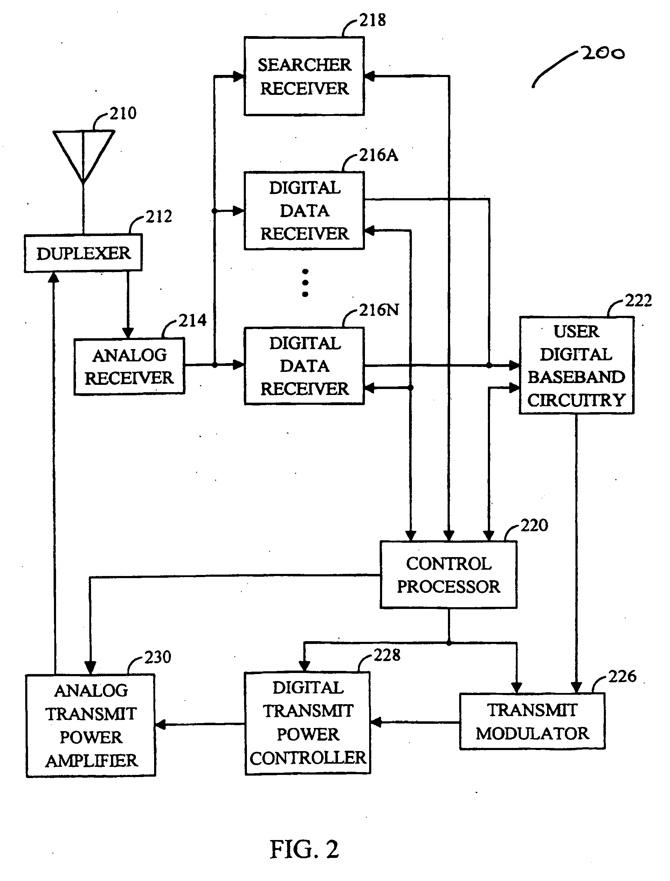

An exemplary transceiver **200** for use in user terminals **124** and **126** is illustrated in FIG. 2. Transceiver **200** uses at least one antenna **210** for receiving communication signals, which are transferred to an analog receiver **214,** where they are down-converted, amplified, and digitized. A duplexer element **212** is often used to allow the same antenna to serve both transmit and receive functions. However, some systems employ separate antennas for operating at different transmit and receive frequencies.

The digital communication signals output by analog receiver **214** are transferred to at least one digital data receiver **216A** and at least one searcher receiver **218.** Additional digital data receivers **216B-216N** can be used to obtain desired levels of signal diversity, depending on the acceptable level of transceiver complexity, as would be apparent to one skilled in the relevant art.

At least one user terminal control processor **220** is coupled to digital data receivers **216A-216N** and searcher receiver **218.** Control processor **220** provides, among other functions, basic signal processing, timing, power and handoff control or coordination, and selection of frequency used for signal carriers. Another basic control function often performed by control processor **220** is the selection or manipulation of pseudonoise (PN) code sequences or orthogonal functions to be used for processing communication signal waveforms. Signal processing by control processor **220 can** include a determination of relative signal strength and computation of various related signal parameters. Such computations of signal parameters, such as timing and frequency may include the use of additional or separate dedicated circuitry to provide increased efficiency or speed in measurements or improved allocation of control processing resources.

The outputs of digital data receivers **216A-216N** are coupled to digital baseband circuitry **222** within the user terminal. User digital baseband circuitry **222** comprises processing and presentation elements used to transfer information to and from a user terminal. That is, signal or data storage elements, such as transient or long term digital memory; input and output devices such as display screens, speakers, keypad terminals, and handsets; A/D elements, vocoders and other voice and analog signal processing elements; and the like, all form parts of the user digital baseband circuitry **222** using elements well known in the art. If diversity signal processing is employed, user digital baseband circuitry **222** can comprise a diversity combiner and decoder. Some of these elements may also operate under the control of, or in communication with, control processor **220.**

When voice or other data is prepared as an output message or communications signal originating with the user terminal, user digital baseband circuitry **222** is used to receive, store, process, and otherwise prepare the desired data for transmission. User digital baseband circuitry **222** provides this data to a transmit modulator **226** operating under the control of control processor **220.** The output of transmit modulator **226** is transferred to a power controller **228** which provides output power control to a transmit power amplifier **230** for final transmission of the output signal from antenna **210** to a gateway.

Transceiver **200** can also employ a precorrection element **232** (not shown) in the transmission path to adjust the frequency of the outgoing signal. This can be accomplished using well known techniques of up- or down-conversion of the transmission waveform. In the alternative, a precorrection element **232** can form part of a frequency selection or control mechanism for the analog up-conversion and modulation stage (**230**) of the user terminal so that an appropriately adjusted frequency is used to convert the digital signal to a desired transmission frequency in one step. Transceiver **200** can also employ a precorrection element **232** in the transmission path to adjust the timing of the outgoing signal. This can be accomplished using well known techniques of adding or subtracting delay in the transmission waveform.

Digital receivers **216A-N** and searcher receiver **218** are configured with signal correlation elements to demodulate and track specific signals. Searcher receiver **218** is used to search for pilot signals, or other relatively fixed pattern strong signals, while digital receivers **216A-N** are used to demodulate other signals associated with detected pilot signals. However, a data receiver **216** can be assigned to track the pilot signal after acquisition to accurately determine the ratio of signal chip energies to signal noise, and to formulate pilot signal strength. Therefore, the outputs of these units can be monitored to determine the energy in, or frequency of, the pilot signal or other signals. These receivers also employ frequency tracking elements that can be monitored to provide current frequency and timing information to control processor **220** for signals being demodulated.

Control processor **220** uses such information to determine to what extent the received signals are offset from the oscillator frequency, when scaled to the same frequency band, as appropriate. This and other information related to frequency errors and Doppler shifts can be stored in a storage or memory element **236** (not shown), as desired.

### IV. Gateway Transceiver

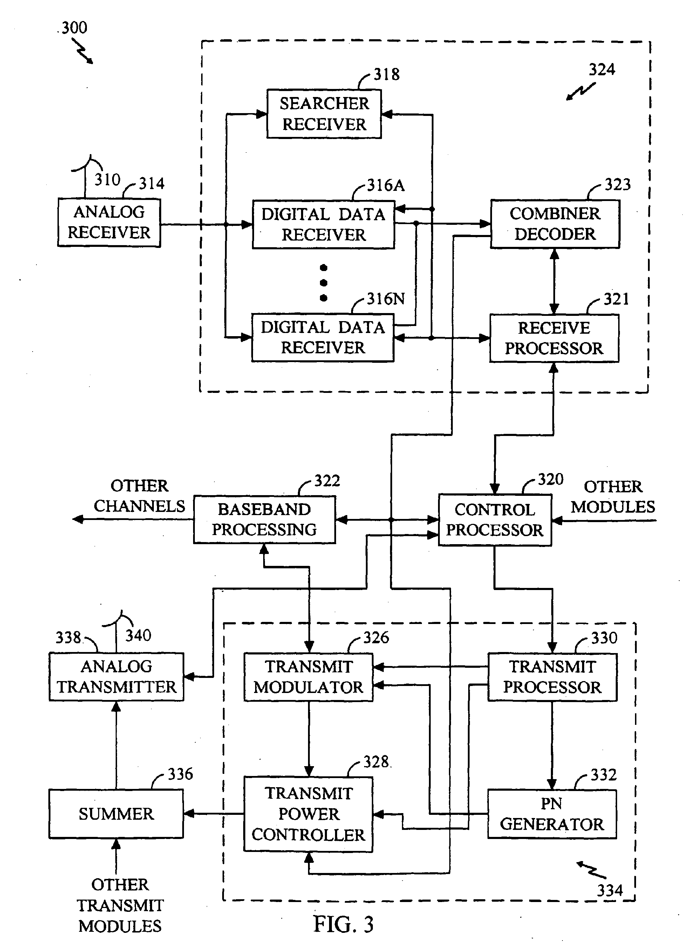

An exemplary transceiver apparatus **300** for use in gateways **120** and **122** is illustrated in FIG. 3. The portion of gateway **120, 122** illustrated in FIG. 3 has one or more analog receivers **314** connected to an antenna **310** for receiving communication signals which are then down-converted, amplified, and digitized using various schemes well known in the art. Multiple antennas **310** are used in some communication systems. Digitized signals output by analog receiver **314** are provided as inputs to at least one digital receiver module, indicated by dashed lines generally at **324.**

Each digital receiver module **324** corresponds to signal processing elements used to manage communications between a gateway **120, 122** and one user terminal **124, 126,** although certain variations are known in the art. One analog receiver **314** can provide inputs for many digital receiver modules **324,** and a number of such modules are often used in gateways **120, 122** to accommodate all of the satellite beams and possible diversity mode signals being handled at any given time. Each digital receiver module **324** has one or more digital data receivers **316** and a searcher receiver **318**. Searcher receiver **318** generally searches for appropriate diversity modes of signals other than pilot signals. Where implemented in the communication system, multiple digital data receivers **316A-316N** are used for diversity signal reception.

The outputs of digital data receivers **316** are provided to subsequent baseband processing elements **322** comprising apparatus well known in the art and not illustrated in further detail here. Exemplary baseband apparatus includes diversity combiners and decoders to combine multipath signals into one output for each user. Exemplary baseband apparatus also includes interface circuits for providing output data to a digital switch or network. A. variety of other known elements such as, but not limited to, vocoders, data modems, and digital data switching and storage components may form a part of baseband processing elements **322.** These elements operate to control or direct the transfer of data signals to one or more transmit modules **334.**

Signals to be transmitted to user terminals are each coupled to one or more appropriate transmit modules **334.** A conventional gateway uses a number of such transmit modules **334** to provide service to many user terminals **124, 126** at a time, and for several satellites and beams at a time. The number of transmission modules **334** used by gateway **120, 122** is determined by factors well known in the art, including system complexity, number of satellites in view, user capacity, degree of diversity chosen, and the like.

Each transmit module **334** includes a transmit modulator **326** which spread-spectrum modulates data for transmission. Transmit modulator **326** has an output coupled to a digital transmit power controller **328,** which controls the transmission power used for the outgoing digital signal. Digital transmit power controller **328** applies a minimum level of power for purposes of interference reduction and resource allocation, but applies appropriate levels of power when needed to compensate for attenuation in the transmission path and other path transfer characteristics. At least one PN generator **332** is used by transmit modulator **326** in spreading the signals. This code generation can also form a functional part of one or more control processors or storage elements used in gateway **122, 124.**

The output of transmit power controller **328** is transferred to a summer **336** where it is summed with the outputs from other transmit modules. Those outputs are signals for transmission to other user terminals **124, 126** at the same frequency and within the same beam as the output of transmit power controller **328.** The output of summer **336** is provided to an analog transmitter **338** for digital-to-analog conversion, conversion to the appropriate RF carrier frequency, further amplification and output to one or more antennas **340** for radiating to user terminals **124, 126**. Antennas **310** and **340** may be the same antennas depending on the complexity and configuration of the system.

At least one gateway control processor **320** is coupled to receiver modules **324,** transmit modules **334,** and baseband circuitry **322;** these units may be physically separated from each other. Control processor **320** provides command and control signals to effect functions such as, but not limited to, signal processing, timing signal generation, power control, handoff control, diversity combining, and system interfacing. In addition, control processor **320** assigns PN spreading codes, orthogonal code sequences, and specific transmitters and receivers for use in user communications.

Control processor **320** also controls the generation and power of pilot, synchronization, and paging channel signals and their coupling to transmit power controller **328.** The pilot channel is simply a signal that is not modulated by data, and may use a repetitive unchanging pattern or non-varying frame structure type (pattern) or tone-type input to transmit modulator **326.** That is, the orthogonal function, Walsh code, used to form the channel for the pilot signal generally has a constant value, such as all 1's or 0's, or a well known repetitive pattern, such as a structured pattern of interspersed 1's and 0's. This effectively results in transmitting only the PN spreading codes applied from PN generator **332.**

While control processor **320** can be coupled directly to the elements of a module, such as transmit module **324** or receive module **334,** each module generally comprises a module-specific processor, such as transmit processor **330** or receive processor **321,** which controls the elements of that module. Thus, in a preferred embodiment, control processor **320** is coupled to transmit processor **330** and receive processor **321,** as shown in FIG. 3. In this manner, a single control processor **320** can control the operations of a large number of modules and resources more efficiently. Transmit processor **330** controls generation of, and signal power for, pilot, sync, paging signals, traffic channel signals, and any other channel signals and their respective coupling to power controller **328.** Receiver processor **321** controls searching, PN spreading codes for demodulation and monitoring received power.

For certain operations, such as shared resource power control, gateways **120** and **122** receive information such as received signal strength, frequency measurements, or other received signal parameters from user terminals in communication signals. This information can be derived from the demodulated outputs of data receivers **316** by receive processors **321.** Alternatively, this information can be detected as occurring at predefined locations in the signals being monitored by control processor **320,** or receive processors **321,** and transferred to control processor **320.** Control processor **320** uses this information to control the timing and frequency of signals being transmitted and processed using transmit power controllers **328** and analog transmitter **338.**

## V. Satellite Beam Patterns

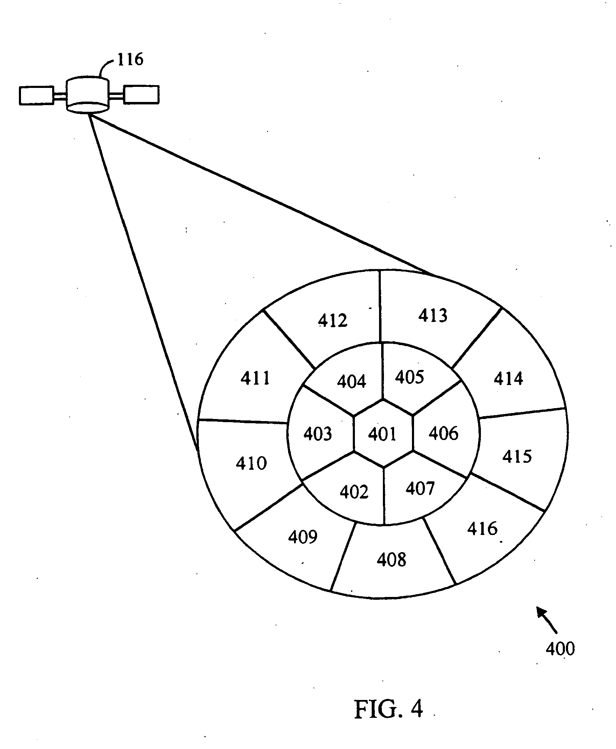

Generally, beams from satellites **116** and **118** cover different geographical areas in predefined beam patterns. Satellite beams are formed by, for example, a phased-array beam forming antenna, as would be apparent to one skilled in the relevant art. FIG. 4 illustrates an exemplary satellite beam pattern, also known as a footprint. As shown in FIG. 4, the exemplary satellite footprint **400** includes sixteen beams **401-416.** More specifically, satellite footprint **400** includes an inner beam (beam **401**), middle beams (beams **402-407**), and outer beams (beams **408-416).** Each beam **401-416** covers a specific geographical area, although there usually is some. beam overlap. These specific geographic areas can be several hundred miles across. Additionally, beams at different frequencies, also referred to as FDM channels, CDM or CDMA channels, or "sub-beams," can be directed to overlap the same region. Beam coverage or service areas for multiple satellites might be designed to overlap completely or partially in a given region depending on the communication system design and the type of service being offered, and whether space diversity is being achieved.

In a preferred embodiment different beam patterns are employed for the forward and reverse communications links. Exemplary alternate forward and reverse link beam patterns are illustrated for example in U. S. Patent Application Serial No.: 08/723,723, entitled *"Ambiguity Resolution For Ambiguous Position Solutions Using Satellite Beams,"* filed September 30, 1996, now allowed. However, the beam patterns of the forward and reverse communications links can be the same without departing from the scope of the invention.

## VI. Preferred Embodiments

A preferred embodiment is discussed in detail below. While specific steps, configurations and arrangements are discussed, it should be understood that this is done for illustrative purposes only. A person skilled in the relevant art will recognize that other steps, configurations and arrangements can be used without departing from the scope of the invention. The invention could find use in a variety of wireless information and communication systems, including those intended for position determination.

As discussed above, there is a need for a system or apparatus and method for reducing the number of paging channels used to page user terminals, or similar apparatus. Paging channels are used for sending information to a user terminal that is not in a communications session. For example, paging channels are often used by gateway **122** on forward link **160, 162** to establish a communication link, to tell user terminal **124** that a call is coming in, to reply to a user terminal trying to access the system, and for registration of user terminal **124.** In a preferred embodiment, the paging channels are used to send a location update request message from gateway **122** to user terminal **124.**

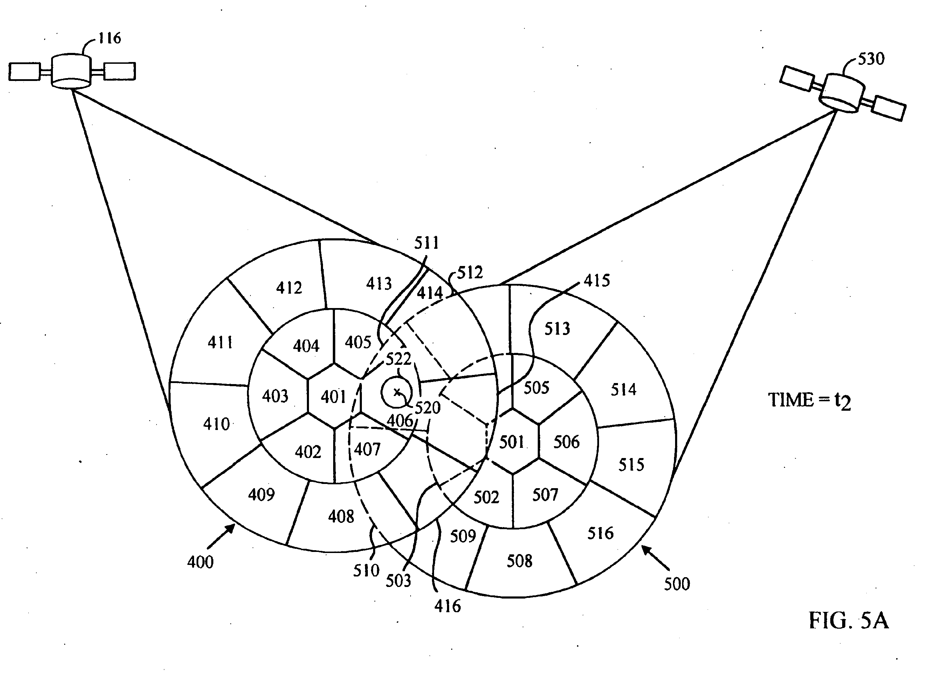

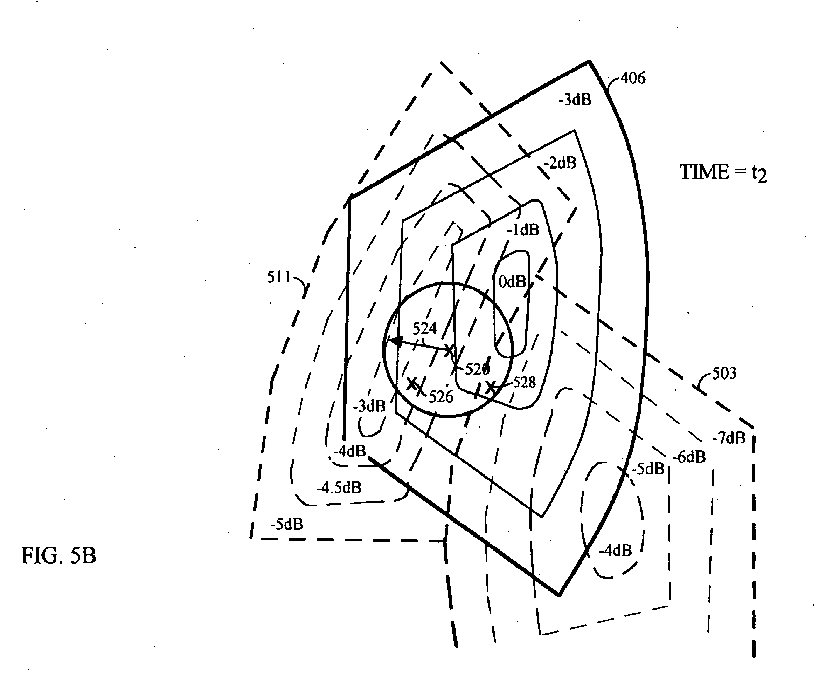

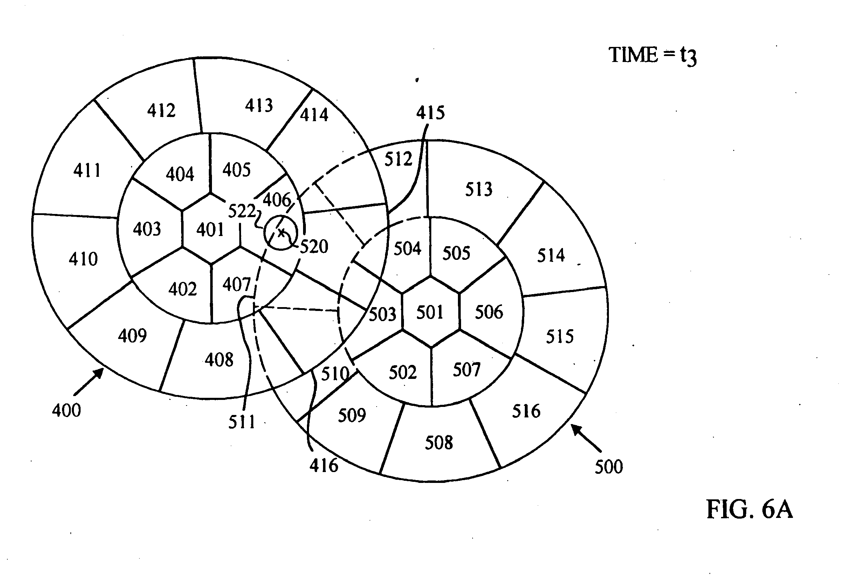

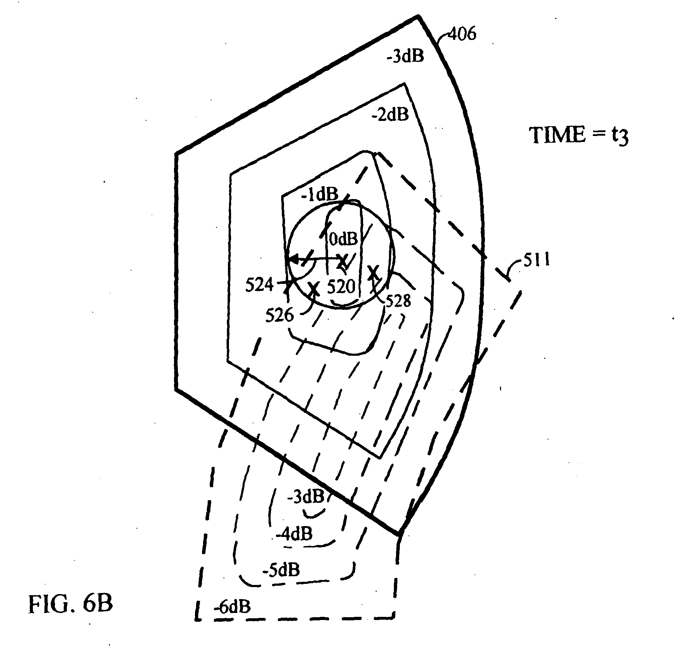

The inventive method and system of reducing the number of paging channels used to page a user terminal is described herein with reference to FIGS. 5A, 5B, 6A and 6B. FIG. 5A illustrates the beam coverage areas of satellites **116** and **530** at a time $t_2$. In a preferred embodiment, satellites **116** and **530** are moving on a scheduled basis and illuminating different regions on the surface of the Earth at different points in time. More specifically, in a preferred embodiment, satellites **116** and **530** are two satellites of a multiple satellite system wherein the satellites orbit such that they are not stationary with respect to a point on the surface of the Earth. The embodiment is also useful in a geosynchronous satellite communications system where the satellites could indefinitely cover substantially the same geographic regions.

Assume that gateway **122** had communicated with user terminal **124** at a time t1 and thereby knows the location of user terminal **124** at time $t_1$. How gateway **122** had determined the location of user terminal **124** at time $t_1$, is discussed in further detail below. Now, assume that gateway **122** needs to page user terminal **124** at a time $t_2$, where time $t_2$ is later in time than time $t_1$. The purpose of the page may be for any of the uses discussed above including to inform user terminal **124** that a call is coming in or to request a location update from user terminal **124**. As discussed above, in a conventional satellite communications system, gateway **122** would flood page by sending a page over many, possibly all, of its paging channels because it does not know the location of user terminal **124** at time $t_2$. That is, a page is transmitted on a given frequency, one channel, on all of the beams of all of the satellites (servicing the user terminal) based on knowing which FDMA channels a user terminal is listening on or to. The preferred embodiment avoids this flood paging by taking advantage of gateway **122** having knowledge of the location of user terminal **124** at a previous point in time, time $t_1$. Before discussing further details of the preferred embodiments, below is a brief discussion of how gateway **122** could have determined the location of user terminal **124** at time $t_1$.

Gateway **122** could have determined the location of user terminal **124** at time $t_1$ in a number of ways. For example, gateway **122** may have calculated the location of user terminal **124** at time $t_1$ based on information sent from user terminal **124** to gateway **122**. This information may have been sent from user terminal **124** to gateway **122** when, for example, user terminal **122** registered with gateway **122**, user terminal **122** attempted to initiate a call, and the like. Examples of systems and methods that can be used to determine a user terminal's location are disclosed in U.S. Patent No. 5,126,748, issued June 30, 1992, entitled *"Dual Satellite Navigation System And Method,"* US. Patent Application No. 08/732,725, filed June 23, 1998, entitled *"Unambiguous Position Determination Using Two Low-Earth Orbit Satellites,"* U.S. Patent Application No. 08/732,722, filed September 30, 1996, entitled *"Passive Position Determination Using Two Low-Earth Orbit Satellites,"* and U.S. Patent Application No. 08/723,751, filed September 30, 1996, entitled *"Position Determination Using One Low-Earth Orbit Satellite,"* each of which is assigned to the assignee of the invention. These patents and applications discuss determining the location of a user terminal using information such as characteristics of communications signals transmitted to and from the user terminal and known positions and velocities of satellites. It is noted that the term "position" and "location" are used interchangeably herein.

Alternatively, user terminal **124** may have provided gateway **122** with its location at time $t_1$. User terminal **124** may have used any available method for determining its location at time $t_1$. In one embodiment, user terminal **124** includes a Global Positioning Satellite (GPS) receiver, which is well known in the art. Using the GPS receiver, user terminal **124** can determine and forward its location to gateway **122.** User terminal **124** may also have determined its location using any other system or method such as a conventional LORAN-C system. User terminal **124** can forward location information to gateway **122** as an access probe on an access channel, embedded within other signals, or as a separate signal. In a preferred embodiment, user terminal **124** forwards the location information in the same access probe that acknowledges receipt of the page. The following features of the preferred embodiment apply regardless of how gateway **122** learns of the location of user terminal 124 at time $t_1$.

Referring again to FIG. 5A, footprints **400** and **500** illustrate the beam coverage areas of satellites **116** and **530,** respectively, at time $t_2$. Footprint **400** includes sixteen beams **401-416,** as discussed above, and footprint **500** includes sixteen beams **501-516.** For the sake of clarity, portions of footprint **500** that overlap footprint **400** are shown as dotted lines. Location **520** (designated by an "X") is the location of user terminal **124** at time $t_1$. As discussed above, gateway **122** has knowledge of location $t_1$.

As shown in FIG. 5A, at time $t_2$ location **520** is within the beam coverage area of both beam **406** (of satellite **116**) and beam **511** (of satellite **530**). By showing only beams **406, 511** and **503,** FIG. 5B makes this even more clear. If satellites **116** and **530** are geostationary satellites then the coverage of footprints **400** and **500** at time $t_1$ and $t_2$ would be substantially the same. However, if satellites **116** and **530** are non-geostationary satellites, as discussed above, then the coverage area of footprints **400** and **500** would be different at time $t_1$ than shown in FIGS. 5A and 5B. Further, depending on the time between time $t_2$ and time $t_2$ the beam coverage areas of satellite **116** (footprint **400**) and satellite **530** (footprint **500**) may not have overlapped location **520** at time $t_1$.

The preferred embodiments take advantage of gateway **122** knowing the location of user terminal **124** at a previous point in time. More specifically, by knowing the location **520** of user terminal **124** at time $t_1$, and by assuming that user terminal **124** could have only traveled a limited distance in the time period between time $t_1$ and

time $t_2$, gateway **122** can hypothesize which beams cover user terminal **124** at time $t_2$. For example, if time $t_1$ was one hour prior to time $t_2$, it can be assumed that user terminal **124** did not travel any further than 80 miles in any direction from its location at time $t_1$. That is, gateway **122** can assume that user terminal **124** is within a certain area at time t. based on a recalled location of user terminal **124** at time $t_1$. Using such an assumption, gateway **122** can hypothesize which beams cover user terminal **124** at time $t_2$. The beam(s) hypothesized to cover user terminal **124** at time t. shall be referred to herein as a first group of beams, designated $g_1$. As discussed above, the preferred embodiment is directed to a system and method of paging user terminal **124** over a single channel of a single beam. More specifically, once gateway **122** has determined the first group of beams, gateway **122** can then determine a strongest beam of the first group of beams. Gateway **122** can then send a page to user terminal **124** on a paging channel of the strongest beam.

From the perspective of user terminal **124,** the actual strength of a received signal sent over a channel of a beam may vary depending on where user terminal **124** is located (within the area that gateway **122** assumes user terminal **124** is located). Additionally, various environmental factors can diminish the power of a signal during its transmission from gateway **122** to user terminal **124.** Thus, the so called "strongest beam" determined by gateway **122** (or a facility in communications with gateway **122)** is actually a theoretically strongest beam relative to a specific location or area (for example, a recalled location of user terminal **124).** For example, the theoretically strongest beam relative to location **520** is the beam that gateway **122** determines to most likely provide the strongest signal to a user terminal located at location **520.**

In one embodiment, gateway **122** sends a page over a paging channel of the "theoretically strongest" beam. If the beam includes multiple paging channels, then gateway **122** can determine which paging channel to use based on a unique identity number of user terminal **124,** as is well known in the relevant art.

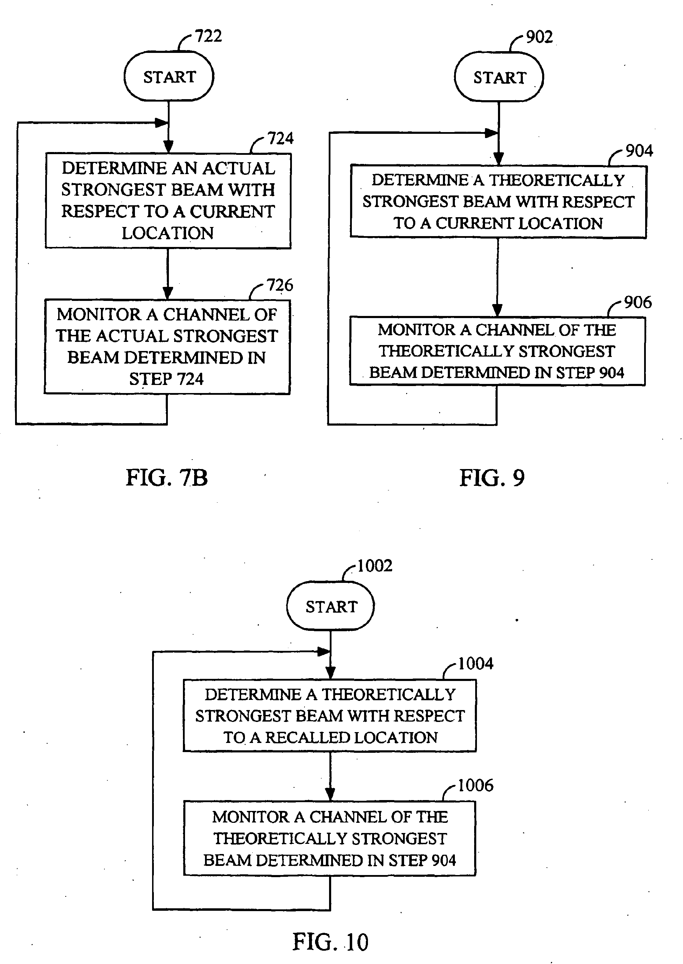

In one embodiment, user terminal **124** determines an "actual strongest" beam of the beams covering user terminal **124.** User terminal **124** can do this, for example, by measuring the signal strength of signals received over channels of different beams. User terminal **124** then monitors a channel of the actual strongest beam. In one embodiment user terminal **124** monitors a paging channel of the actual strongest beam, as discussed below in the description of FIG. 7B. If the "theoretically strongest" beam determined by gateway **122** is the same as the "actual strongest" beam determined by user terminal **124,** then user terminal **124** will receive a page that is sent by gateway **122** over a paging channel of the theoretically strongest beam at time $t_2$. This is because user terminal **124** will be monitoring the channel of the beam that gateway **122** uses to send the page. However, if the theoretically strongest beam determined by gateway **122** is different than the actual strongest beam determined by user terminal **124,** then user terminal **124** will not receive the page sent at time $t_2$.

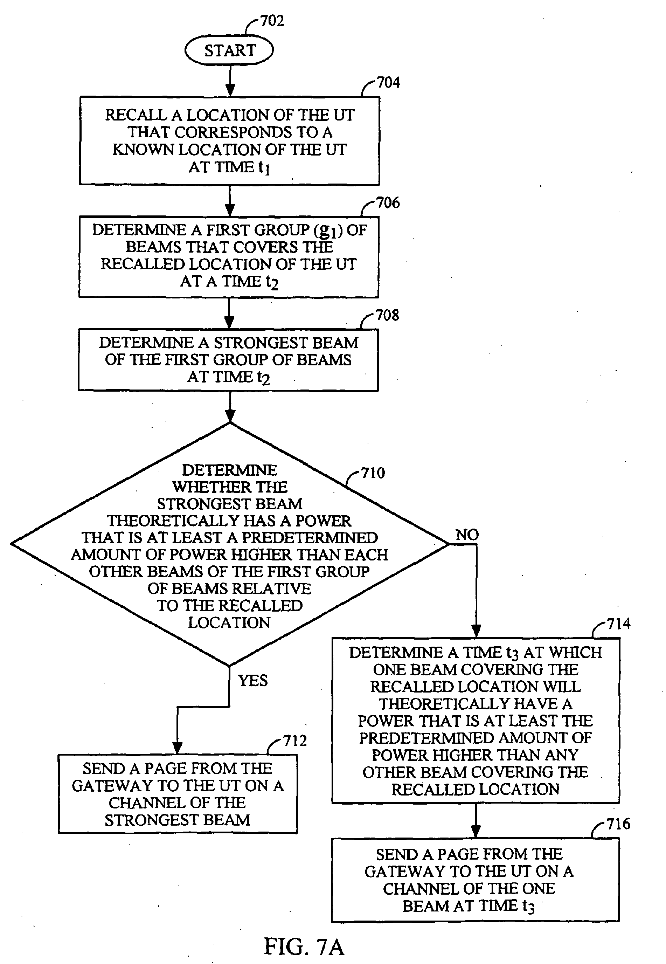

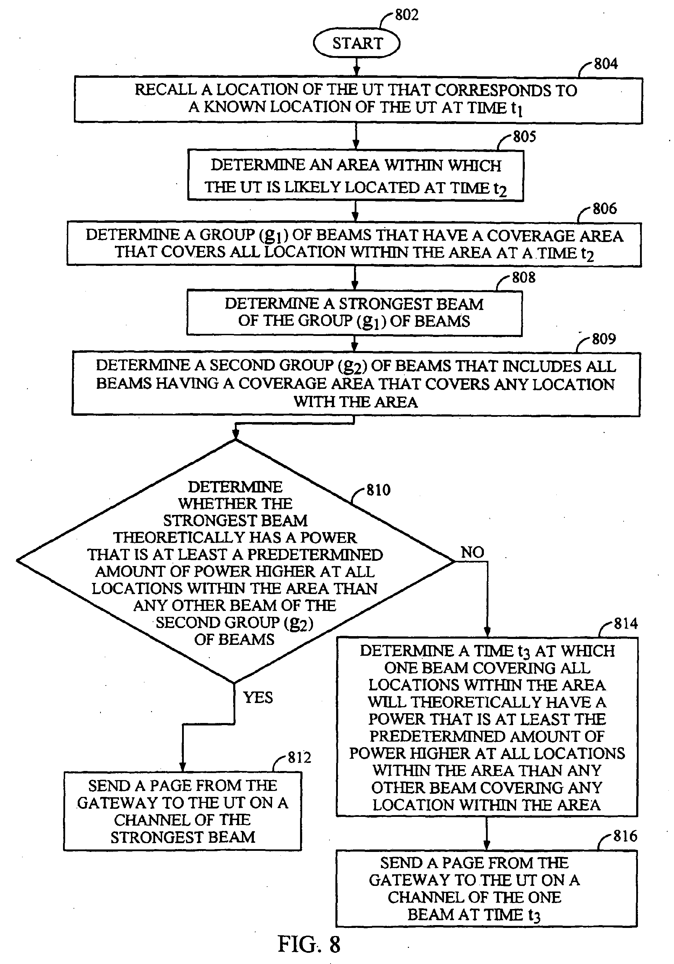

In order to increase the probability that a theoretically strongest beam and an actual strongest beam are the same beam, gateway **122** can wait, if necessary, to send the page until one beam theoretically has a power that is at least a predetermined amount of power higher than any other beam covering the area within which gateway **122** assumes user terminal **124** is located. More specific details of this feature are described below with reference to the flow charts in FIGS. 7A and 8.

In another embodiment, gateway **122** and user terminal **124** each independently determine a theoretically strongest beam. User terminal **124** continually monitors a paging channel of the theoretically strongest beam, which can change over time. If user terminal **124** and gateway **122** use identical algorithms and identical variables (the values input into the algorithm), user terminal **124** should receive pages sent by gateway **122.** However, if user terminal **124** and gateway **122** use identical algorithms, but different variables, there is the possibility that user terminal **124** and gateway **122** will determine or select different theoretically strongest beams. Where user terminal **124** and gateway **122** use identical algorithms but different variables, features of the embodiments increase the probability that user terminal **124** and gateway 122 will determine the same theoretically strongest beam. More specific details of these embodiments are described below with reference to the flow charts in FIGS. 9 and 10.

A. User Terminal Monitors A Channel of the Actual Strongest Beam

FIGS. 7A and 7B provide a high level description of one embodiment. For exemplary purposes, the method of FIGS. 7A and 7B shall be described with reference to FIGS. 5A, 5B, 6A and 6B. FIGS. 5A and 5B respectively illustrate the footprints of satellites **116** and **530** at time $t_2$. FIGS. 6A and 6B respectively illustrate the same footprints at a time $t_3$, wherein $t_3$ is later in time than $t_2$. The steps of FIG. 7A are performed by gateway **122** or a facility in communications with gateway **122.** The steps of FIG. 7B are performed by user terminal **124.**

More specifically, the steps of FIG. 7B are performed by user terminal **124** in the embodiment where user terminal **124** monitors a channel of an actual strongest beam. In step **724** user terminal **124** determines an actual strongest beam with respect to its current location. User terminal **124** can do this by measuring the signal strength of signals received over channels of various beams covering user terminal **124.** In step **726,** user terminal **124** monitors a channel of the actual strongest beam determined in step **724.** User terminal 124 continually performs these steps such that it is generally monitoring a channel of the beam that is actually strongest with respect to its current location.

Referring to FIG. 7A, the first step performed by gateway **122** (or a facility in communications with gateway **122)**, step **704,** is recalling the location of user terminal **124** at time $t_1$. This can be accomplished by performing a lookup in a table, list, or database stored in one or more memory elements or circuits, that is used to store location information of user terminals at different points in time. The location of user terminal **124** at time $t_1$ shall be referred to herein as recalled location **520**. Recalled location **520** could have been determined using any method including those discussed above.

In step **706,** using knowledge of the satellite constellation, including the beam coverage areas of the satellites at different points in time, a determination is made of which beams cover recalled location **520** at time $t_2$. The beams which cover recalled location 520 at time $t_2$ shall be referred to herein as the first group of beams, designated $g_1$. As discussed above, if the satellite constellation is geosynchronous then the same beams that covered recalled location 520 at time $t_1$ would also cover recalled location **520** at time $t_2$. If the satellite constellation is not geosynchronous, then different beams would probably cover recalled location **520** at time $t_2$ as compared to at time $t_1$ (unless the period between time $t_2$ and time $t_1$ is short, for example, a few seconds, or so long as to allow a complete orbit traversal by the satellite).

The first group of beams can consist of one beam or multiple beams. Additionally, the first group of beams may be produced by the same satellite or by multiple satellites. For example, the first group of beams may include two beams of the same satellite if recalled location **520** is located at the edge of two beams produced by the same satellite. Furthermore, if footprints of different satellites overlap, as they do in FIGS. 5A and 5B, the first group of beams can include beams produced by different satellites. For the example of FIGS. 5A and 5B, the first group includes beam **406** (produced by satellite **116)** and beam **511** (produced by satellite 530).

In step 708, once it is determined which beams cover recalled location **520** at time $t_2$ (that is, the first group of beams are determined), gateway **122** determines a strongest beam of the first group of beams.

In one embodiment, the determined strongest beam is the beam that theoretically has a highest power relative to recalled location **520** at time $t_2$. FIG. 5B illustrates the theoretical relative powers of beams **406** and **511**. It can be seen that the signal power of a beam is strongest at the center of a beam and weakest at the edge of a beam. Typically, the signal power at the edge of each beam is approximately 3 dB less (half the power) than the power at the center of each beam. Referring to FIG. 5B, beam **406** is theoretically the strongest beam, of the first group of beams, with respect to recalled location **520**. More specifically, with respect to location **520,** beam **406** theoretically has a power that is 2.5 dB higher than beam **511** (the difference between -2.0 dB and -4.5 dB).

A page can then be sent over a channel of the strongest beam determined in step **708.** However, if this strongest beam is for example only 2 dB higher than the next strongest beam, there is a relatively high probability that user terminal **124** (which is monitoring the beam that is actually strongest at its current location) is not monitoring a channel of the theoretically strongest beam determined in step **708.** This is because another beam can have a higher power than the theoretically strongest beam, with respect to the actual location of user terminal **124** at time $t_2$. When looking at beams from multiple satellites, various environmental factors that can diminish the power of a signal during its transmission from gateway **122** to user terminal **124** may cause the "theoretically strongest" beam from one satellite for a specific location to be different than the "actual strongest" beam being received (from other satellite) for that specific location. The embodiment can include additional features to increase the probability that gateway **122** sends a page over the channel that user terminal **124** is monitoring. More specifically, in step **710** a determination is made whether or not the strongest beam determined in step **708** theoretically has a power that is at least a predetermined amount of power higher than a threshold, which is generally set as the power of each other beam of the first group of beams relative to recalled location **520**. This step can be accomplished by determining the theoretical power, relative to recalled location **520,** for each beam of the first group of beams.

Assume that this threshold predetermined amount of power is, for example, 3 dB. That is, if the strongest beam determined in step **708** is theoretically at least 3 dB stronger than the theoretical power of each other beam of the first group of beams, then the probability is high that user terminal **124** is listening to the theoretically strongest beam determined in step **708.** Accordingly, if the answer to step **710** is YES, then in step **712** a page is sent from gateway **122** to user terminal **124** on the paging channel of the strongest beam determined in step **708.**

As discussed above, the signal strength or power of the strongest beam **406** is theoretically only 2.5 dB stronger than beam **511,** with respect to recalled location **520** at time $t_2$. Thus, for this example the answer obtained in step **710** is NO.

[0081] If the answer in step **710** is NO, then a time $t_3$ is determined in step **714.** Time $t_3$ is a future point in time (later in time than $t_2$) at which one beam covering recalled location **520** will theoretically have a power that is at least the predetermined amount of power higher (for this example, 3 dB) than any other beam covering recalled location **520**. In one embodiment this one beam is selected from the first group of beams including the strongest beam determined in step **708.** In another embodiment, this one beam is selected from any of the total number of 'm' beams produced by all of the satellites of communications system **100.** By waiting until one beam has a power that is theoretically the predetermined amount of power higher than each other beam covering the recalled location, the probability is increased that user terminal **124** is actually monitoring a channel of that one beam when a page is sent.

Time $t_3$ can be determined at gateway **122** or at some other facility that is in communications with gateway **122,** such as at one or more central command or control centers for communications system **100**. Time $t_3$ can be determined using knowledge of the satellite constellation, including the beam coverage areas of the satellites at different points in time. Time $t_3$ could be determined for example by setting it at $t_3 - t_2 = t_2 - t_1$. If paging fails at this point in time, one can proceed to a time $t_4$ determined similarly, and so forth.

The coverage areas of beams change over time if the satellites transmitting the beams are not stationary with respect to a point on the surface of the Earth. As mentioned above, FIGS. 6A and 6B illustrate the coverage areas of beams transmitted from satellite **118** (footprint **400**) and satellite **530** (footprint **500**) at a future point in time, time $t_3$. When comparing FIGS. 6A and 6B to FIGS. 5A and **5B** it can be seen that footprints **400** and **500** will move with respect to one another and with respect to recalled location **520**. FIGS. 6A and 6B show that beams **406** and **511** will still be the only beams to cover recalled location **520** at time $t_3$. However, it can be seen that recalled location **520** will be closer to the center of beam **406** and closer to the edge of beam **511** at time $t_3$. Specifically, referring to FIG. **6B,** beam **406** at time $t_3$ will have a strength that is theoretically 6 dB (the difference between 0 dB and -6 dB) higher than beam **511,** with respect to recalled location **520**. Thus, at time $t_3$ beam **406** will theoretically have a power that is at least the predetermined amount of power higher (in this example, 3 dB) than any other beam covering recalled location **520**. Thus, if gateway **122** waits until time $t_3$ to send a page over a channel of beam **406**, the probability is increased that user terminal **124** will actually be monitoring the channel of beam **406.**

Accordingly, in step **716**, gateway **122** waits until time $t_3$ and sends a page to user terminal **124** on a paging channel of the one beam that is determined to theoretically have a power or signal strength that is at least the predetermined amount higher than any other beam covering recalled location **520**. For the example of FIGS. 5A, 5B, 6A and 6B, gateway **122** sends a page over a channel of beam 406 at time $t_3$.

It is noted that the steps of sending a page from gateway **122** to user terminal **124** (steps **712** and **716**) do not include the step of user terminal **124** receiving the page. Furthermore, steps **712** and **716** do not imply that user terminal **124** is definitely located within a geographic region where it is capable of receiving the page (that is, the paging signal may be out of range of the user terminal). What occurs in steps **712** and **716** is gateway **122** sends a page over a channel of a beam that gateway **122** hypothesizes user terminal **124** is monitoring. Thus, gateway **122** does not know whether or not user terminal **124** received the page until user terminal **124** sends a message to gateway **122** acknowledging receipt of the page.

It is also noted that the threshold predetermined amount of power can be a value other than 3 dB without departing from the scope of the invention.

Alternative and more detailed steps of the method of FIG. 7A are described with reference to FIG. 8. As alluded to above, the first group of beams can be determined with respect to an area surrounding recalled location **520**, rather than with respect to only recalled location **520**. This is illustrated in steps **805** and **806,** which expand upon how the first group of beams ($g_1$) is determined. The method of FIG. 8 is described below with reference to FIGS. 5A, 5B, 6A and 6B.

The first step, **804,** is recalling the location of user terminal 124 at time $t_1$. This is the same as step **704.**

Steps **805** and **806** expand upon how the first group of beams ($g_1$) is determined in step **706**. In step **805**, an area **522** is determined based on recalled location **520**. This area **522** represents a geographic region within which user terminal **124** is likely to be located at time $t_2$. Area **522** can have a defined radius **524** originating at recalled location **520**. Radius **524** can have a fixed predetermined value, such as 100 miles. Alternatively, radius **524** can be a function of the time period between time $t_1$ and time $t_2$. An example algorithm for determining radius **524** is:

$$R = (t_2 - t_1) \times D$$

where

R is radius **524;**
$t_2 - t_1$ is the time period (in hours) since user terminal **124** was located at first location **520;** and
D is the maximum distance that it is assumed user terminal **124** could have traveled in one hour (for example, at a velocity of 60 miles an hour).

Using this example algorithm, if the time period between time $t_1$ and time $t_2$ is 2 hours, and D is assumed to be 60 miles in one hour, then R is 120 miles. Of course, D can have another predetermined value or can be specific to each user terminal, as would be understood by those skilled in the art.

After area **522** is determined, beams having a coverage area that covers all locations within area **522** at time $t_2$ are selected or determined in step **806.** As discussed above, this is determined using knowledge of the satellite constellation, including the beam coverage areas of the satellites at different points in time. These beams shall be referred to as the first group of beams ($g_1$). The first group of beams represents those beams that can be used to page user terminal **124** at any location within area **522**. For the example of FIGS. 5A and 5B, the first group of beams includes only beam **406.** Even though beams **503** and **511** also cover recalled location **520**, they do not cover all locations within area **522**. As discussed above, area **522** represents a geographic region within which user terminal **124** is likely to be located at time $t_2$. Locations **526** and **528** are two of the indefinite number of locations within area **522**. As can be seen from FIG. 5B, only beam **406** covers both locations **526** and **528**. In contrast, beams **511** and **503** each only cover one of the two locations **526** and **528** (that is, beam **511** covers only location **526**, and beam **503** covers only location **528**). Thus, if a channel of beam **511** was used to page user terminal **124**, user terminal **124** would not receive the page if it was located at location **528**.

Once the first group of beams is determined, gateway **122** determines a strongest beam of the first group of beams, in step **808**. In one embodiment, the determined strongest beam is the beam that theoretically has a highest power relative to a majority of locations within area **522** at time $t_2$. FIG. 5B illustrates the theoretical relative powers of beams **406, 503** and **511**. Referring to FIG. 5B, beam **406** has the highest power relative to a majority of locations (actually, all locations) within area **522** at time $t_2$.

In step **809**, a second group ($g_2$) of beams is determined. This second group includes all beams having a coverage area that covers "any location" within area **522**. In other words, the second group of beams includes any beam having a coverage area that overlaps (or intersects) at least a portion of area **522**. This group represents those beams that user terminal **124** may be monitoring if user terminal **124** is actually located, as assumed, within area **522**. Referring to FIGS. 5A and 5B, the second group of beams includes beams **406, 503** and **511**.

In step **810**, a determination is made whether or not the strongest beam determined in step **808** theoretically has a power that is at least a predetermined amount of power higher than each other beam of the second group of beams relative to all locations within area **522**. This step can be accomplished by determining the theoretical power, relative to all locations within area **522**, for each beam of the second group of beams.

Assume again the predetermined amount of power is 3 or 4 dB. If the strongest beam determined in step **808** is theoretically at least 3 dB stronger than the power of each other beam of the second group of beams for all locations within area **522**, then the probability is high that user terminal **124** is monitoring the beam determined in step **808**. Accordingly, if the answer in step **810** is YES, then in step **812** a page is sent from gateway **122** to user terminal **124** on a paging channel of the strongest beam determined in step **808**.

For the example shown in FIG. 5B the strongest beam **406** is not theoretically at least 3 dB stronger than beams **503** and **511** for every location within area **522**. For example, at location **526**, beam **406** is theoretically only 2 dB stronger than beam **511** (the difference between -4 dB and -2 dB) at time $t_2$. Thus, for this example the answer in step **810** is NO.

**[0097]** It is noted that steps of the method of the preferred embodiments can be performed in a different order and/or combined, without departing from the scope of the invention. For example, steps **808** and **810** can be combined into one step. That is, the first group of beams determined in step **806** and the second group ($g_2$) of beams determined in step **809** can be determined without specifically determining a theoretically strongest beam of the first group of beams. Then, in a step combining steps **808** and **810**, a determination can be made whether or not a single beam, of the first group of beams, theoretically has a power at time $t_2$ that is at least a predetermined amount of power higher at all locations within area **522** than any other beam of the second group of beams. If such a single beam does exist then this single (strongest) beam is used to page user terminal **124** in step **812**.

If the answer in step **810** is NO, then a time $t_3$ is determined in step **814**. Time $t_3$ is a time, later in time than time $t_2$, at which one beam covering all locations within area **522** will theoretically have a power at all locations within area **522** that is at least the predetermined amount of power higher (for example, 3 dB) than any other beam. Step **814** is similar to step **714** discussed above except that the determined one beam must have a theoretical power that is at least the predetermined amount of power higher for "all locations" within area **522** rather than just for recalled location **520**. Referring specifically to FIG. 6B, it can be seen that beam **406** will be at least 3 dB stronger than beam **511** with respect to all locations within area **522** at determined time $t_3$.

It is noted that if the difference between time $t_2$ and $t_3$ is significant, then the area **522** within which user terminal **124** is assumed to be located can be increased. That is, it is assumed that a user terminal can move farther from a previous known location with the passage of time. Accordingly, in one embodiment, the size of area **522** increases as the time between $t_2$ and $t_3$ increases.

Next, in step **816**, a page is sent from gateway **122** to user terminal **124** on a paging channel of the one beam (determined in step **814**) at time $t_3$. In one embodiment, this one beam is selected from the first group of beams including the strongest beam determined in step **808**. In another embodiment, this one beam is selected from any of the total number of 'm' beams produced by all of the satellites of communications system **100**. By waiting until one beam has a power that is theoretically a predetermined amount of power higher at all locations within area **522** than any other beam covering any location within area **522**, the probability is increased that user terminal **124** (regardless of its location within area **522**) is actually monitoring a paging channel of that one beam when a page is sent.

In one embodiment, during the method described in FIG. 8, user terminal **124** performs the same steps discussed above in the description of FIG. 7B. That is, user terminal **124** continually monitors a channel of the beam that is actually strongest with respect to its current location. If user terminal **124** is actually located within area **522** (determined by gateway **122** in step **805**), then user terminal **124** should be monitoring a channel of the same beam that gateway **122** uses to send a page in either step **812** or **814**.

In the above embodiments, if the time periods over which the process extends become excessively or undesirably long, for example $t_3$ (or subsequent times) also fails, then paging can revert or change to use flood type paging or paging over at least some set of multiple channels (beams) to assure reaching the UT(s). Therefore, single or reduced number of channel pages are used most of the time for reaching or establishing links with most UTs and multiple beam paging is used only a small portion of the time, achieving a marked reduction in wasted energy or capacity for paging.

## B. User Terminal Monitors Paging Channel of a Theoretically Strongest Beam

Assume that user terminal **124** is within the coverage area of three beams at time $t_2$. In the above discussed embodiments of the present invention, user terminal **124** monitors a channel (for example, a paging channel) of a beam that user terminal **124** determines to actually provide the strongest signal power. Gateway **122** guesses which channel user terminal **124** is monitoring by determining theoretical powers of beams with respect to locations on the surface of the Earth.

In alternative embodiments, user terminal **124** performs essentially the same algorithm that is performed by gateway **122**. That is, using knowledge of the satellite constellation, including the beam coverage areas of the satellites at different points in time, user terminal **124** can determine which beams cover its current location (or recalled location **520**) at time $t_2$. User terminal **124** can receive the information about the satellite constellation by monitoring channels that broadcast such information from time to time. In these alternative embodiments, user terminal **124** monitors a channel of a theoretically strongest beam rather than an actual strongest beam (this is not to say that the theoretically strongest beam is necessarily different than the actual strongest beam). In this manner, if gateway **122** and user terminal **124** determine that the same beam theoretically has the highest power, then user terminal **124** will receive a page sent by gateway **122**. This is regardless of which beam is actually the strongest beam with respect to a current location of user terminal **124**. In one embodiment, user terminal **124** can determine the theoretically strongest beam with respect to its current location. Alternatively, if user terminal **124** keeps track of when it last communicated with gateway **122**, then user terminal **124** can determine the theoretically strongest beam with respect to a recalled location.

FIGS. 9 and 10 provide a high level description of the alternative embodiments. More specifically, FIGS. 9 and 10 includes steps that can be performed by user terminal **124** in place of the steps in FIG. 7B. As was true for the steps of FIG. 7B, the steps of FIGS. 9 and 10 can be performed by user terminal **124** concurrently with either the method described in FIG. 7A or the method described in FIG. 8.

Referring first to FIG. 9, in step **904** user terminal **124** determines a beam that theoretically has the highest power with respect to its current location. In step **906**, user terminal **124** monitors a channel of the theoretically strongest beam determined in step **904**. User terminal **124** continually performs these steps such that it is always monitoring a channel of the beam that is theoretically strongest with respect to its current location. If user terminal **124** is within area **522** determined by gateway **122** in step **805**, then user terminal **124** should be monitoring a page channel of the same beam that gateway **122** uses to send a page in either step **812** or **814**.

Referring to FIG. 10, in step **1004** user terminal **124** determines a theoretically strongest beam with respect to a recalled location. In one embodiment, the recalled location is the location at which user terminal **124** was located during its last communication with gateway **122**. In the example of FIGS. 5A and 5B, if user terminal **124** last communicated with gateway **122** at time $t_1$, then the recalled location is location **520**. In step **1006**, user terminal **124** monitors a channel of the theoretically strongest beam determined in step **1004**.

In each of the above discussed embodiments, if user terminal **124** receives the page it sends an acknowledgment message to gateway **122** indicating that it has received the page. In a preferred embodiment, user terminal **124** sends this acknowledgment message as an access signal or probe over an access channel that is associated with a paging channel over which user terminal **124** received the page.

As discussed above, gateway **122** may calculate the location of user terminal **124** based on either the characteristics of the acknowledgment message and/or the information included in the acknowledgment message. Once gateway **122** has determined the location of user terminal **122**, a table or database of information including the locations of user terminals at different points in time can be updated. Furthermore, the location information may be forwarded to another facility, such as a truck dispatcher facility, or a central system controller.

Of course the page could have been sent for a reason other than requesting a position update, such as to notify user terminal **122** that a voice call is coming in. If this is the case, once gateway **122** receives an acknowledgment from user terminal **124**, gateway **122** can send an additional page which instructs user terminal **124** to switch to a specific traffic channel to thereby receive the voice call, or other communication. A person skilled in the relevant art will recognize that a page may have been used for other purposes without departing from the scope of the invention.

The preferred embodiments can reduce the number of paging channels used to page a user terminal by an order of magnitude or more compared to conventional flood paging techniques. Conventional satellite communications systems often page a user terminal over as many as thirty paging channels. The preferred embodiments can page a user terminal using a single channel. In addition, this technique can further reduce the number of paging channels used by a factor of around 2 or 3 when compared to the previous improvement in paging as disclosed in *"Apparatus And Method For Paging"* referenced above.

The previous description of the preferred embodiments is provided to enable any person skilled in the art to make or use the invention. While the invention has been particularly shown and described with reference to preferred embodiments thereof, it will be understood by those skilled in the art that various changes in form and details may be made therein without departing from the scope of the invention.

**Claims**

1. A method for sending a page to a user terminal, UT, (124, 126) in a satellite communications system (100) having at least one gateway (120, 122) and one or more satellites (116, 118), wherein each satellite (116) produces a plurality of beams (140 - 148) and each beam includes a plurality of channels, and wherein the satellites (116, 118) produce a total number of beams m (140 -152), **characterised by** the method comprising the steps of:

   a) recalling a location of the UT (124, 126) corresponding to a known location of the UT at a time $t_1$, (704);
   b) based on said location, determining a group $g_1$ of beams that covers said recalled location of the UT (124, 126) at a time $t_2$, where $g_1 < m$ and $t_2 > t_1$, (704);
   c) determining a strongest beam, by calculating the theoretical received power with respect to the recalled location, of said group $g_1$ of beams at time $t_2$, (708); and
   d) sending the page from the gateway (120, 122) to the UT (124, 126) on a channel of said strongest beam, (710).

2. The method of claim 1, wherein step c) comprises determining which beam of said group $g_1$ of beams has a highest power, as determined by the gateway (120, 122), relative to said recalled location at time $t_2$.

3. The method of claim 2, wherein step d) is only performed if said strongest beam, as determined by the gateway (120, 122), has a power that is at least a predetermined amount higher than of each other beam of said group I $g_1$ of beams relative to said recalled location.

4. The method of claim 3, further comprising the steps of

   e) determining a time $t_3$, where $t_3 > t_2$, at which one beam covering said recalled location will have a power, as determined by the gateway (120, 122), that is at least said predetermined amount of power higher than of any other beam covering said recalled location (714); and
   f) sending the page over a channel of said one beam at time $t_3$ (716), wherein steps e) and f) are performed only if said strongest beam at time $t_2$ did not have a power, as determined by the gateway (120, 122), that was at least said predetermined amount of power higher than of any other beam of said group $g_1$ of beams.

5. The method of claim 4, wherein said one beam is selected from said group $g_1$ of beams including said strongest beam.

6. The method of claim 4, wherein said one beam is selected from any of the total number of m beams produced by the one or more satellites (116,118).

7. The method of claim 1, wherein said channel of said strongest beam comprises a paging channel.

8. The method of claim 1, wherein step b) comprises:

   determining an area (805), based on said recalled location (704, 804), within which the UT (124, 126) is assumed to be located at time $t_2$; and
   determining which of said total number of beams m have a coverage area (806) that covers all locations within said area.

9. The method of claim 8, wherein said area has a defined radius (524) originating at said recalled location and wherein step b) further comprises:

   determining a time period between time $t_1$ and time $t_2$; and
   determining said defined radius as a function of said time period.

10. The method of claim 8, wherein step c) comprises determining (808) which of said group $g_1$ of beams at time $t_2$ theoretically has a highest power relative to a majority of locations within said area.

11. The method of claim 8, wherein step c) further comprises:

   determining a second group $g_2$ of beams (809), where $g_2 < m$, said second group $g_2$ of beams including all beams that have a coverage area that covers any location within said area; and determining whether or not said strongest beam (810) has a power, as determined by the gateway (120, 122), at all locations within said area that is at least a predetermined amount of power higher than of any other beam of said second group $g_2$ of beams.

12. The method of claim 11, wherein step d) is only performed (810) if a single beam of said group $g_1$ of beams has a power, as determined by the gateway (120,122), at all locations within said area that is at least said predetermined amount of power higher than of any other beam of said second group $g_2$ of beams.

13. The method of claim 12, further comprising the steps of:

e) determining a time $t_3$ (814), where $t_3 > t_2$, at which one beam covering all locations within said area will have a power, as determined by the gateway (120, 122), at all locations within said area that is at least said predetermined amount of power higher than of any other beam covering any location within said area;
f) sending the page (816) over a channel of said one beam at time $t_3$; and

wherein steps e) and f) are performed only if said strongest beam at time $t_2$ did not have a power, as determined by the gateway (120, 122), at all locations within said area that was at least said predetermined amount of power higher than of any other beam of said second group, $g_2$, of beams.

14. The method of claim 13, wherein said one beam is selected from said group $g_2$ of beams including said strongest beam.

15. The method of claim 14, wherein said one beam is selected from any of the total number m of beams produced by the one or more satellites (116,118).

16. The method of claim 13, wherein said channel of said one beam comprises a paging channel.

17. The method of claim 1, wherein steps, a) through d) are performed by the gateway (120, 122) or a facility in communications with the gateway (120, 122), and wherein the following steps are performed by the UT (124, 126):

continually measuring the strength, in terms of received power, of each of the m beams that cover the UT (124, 126), wherein the beams that cover the UT (124, 126) can change over time, and wherein said strength of each of the beams can change over time;
continually determining an actual strongest beam (724), in terms of the received power, of the beams that cover the UT (124, 126), wherein said actual strongest beam can change over time; and
continually monitoring a channel of said actual strongest beam (726).

18. The method of claim 13, wherein steps a) through f) are performed by the gateway (120, 122) or a facility in communications with the gateway (120, 122), and wherein the following steps are performed by the UT (124, 126):

continually measuring a strength, in terms of the received power, of each of the m beams that cover the UT (124, 126), wherein the beams that cover the UT (124,126) can change over time, and wherein said strength of each of the beams can change over time;
continually determining an actual strongest beam (724), in terms of the received power, of the beams that cover the UT (124, 126), wherein said actual strongest beam can change over time; and
continually monitoring a channel of said actual strongest beam (726).

19. The method of claim 1, wherein steps a) through d) are performed at the gateway (120, 122) or a facility in communications with the gateway (120, 122), and wherein the following steps are performed by the UT (124, 126):

continually determining a current location of the user terminal (124, 126), wherein said current location can change over time;
continually determining a theoretically strongest beam (904), as determined by the UT (124, 126) in terms of the received power, based on said current location, wherein said theoretically strongest beam can change over time; and
continually monitoring a channel of said theoretically strongest beam (906).

20. The method of claim 13, wherein steps a) through f) are performed by the gateway (120, 122) or a facility in communications with the gateway (120, 122), and wherein the following steps are performed by the UT (124, 126):

continually determining a current location of the user terminal (124, 126), wherein said current location can change over time;
continually determining a theoretically strongest beam (904), as determined by the UT (124, 126) in terms of the received power, based on said current location, wherein said theoretically strongest beam can change over time; and continually monitoring a channel (906) of said theoretically strongest beam.

21. The method of claim 1, wherein steps a) through d) are performed by the gateway or a facility in communications with the gateway, and wherein the following steps are performed by the UT (124, 126) at time $t_2$:

recalling a location of the UT (124, 126) at time $t_1$;
determining a theoretically strongest beam (904), as determined by the UT (124, 126) in terms of the received power, based on said recalled location; and
monitoring a channel (906) of said theoretically strongest beam at time $t_2$.

22. An apparatus (100) for sending a page to a user terminal, UT, (124,126) in a satellite communications system having a gateway (120, 122) and one or more satellites (116,118), wherein each satellite (118) produces a plurality of beams (140-148) and each beam includes a plurality of channels, and wherein the one or more satellites (116, 118) produce a total number of m beams (140 - 152), the apparatus comprising:

means for recalling a location of the UT (124, 126), said recalled location corresponding to a known location of the UT (124, 126) at a time $t_1$;
means for determining, based on said location, a group $g_1$ of beams that covers said recalled location of the UT (124, 126) at a time $t_2$, where $g_1 < m$ and $t_2 > t_1$ ;
means for determining a strongest beam, by calculating the theoretical received power with respect to the recalled location, of said group $g_1$ of beams at time $t_2$; and
means for sending the page from the gateway (120, 122) to the UT (124, 126) on a channel of said strongest beam.

23. The apparatus of claim 22, wherein said strongest beam is a beam of said group $g_1$ of beams that has a highest power, as determined by the gateway (120, 122), relative to said recalled location at time $t_2$.

24. The apparatus of claim 23, wherein said means for sending the page only sends the page at time $t_2$ if said strongest beam has a power, as determined by the gateway (120, 122), that is at least a predetermined amount of power higher than of each other beam of said group $g_1$ of beams relative to said recalled location.

25. The apparatus of claim 24, further comprising:

means for determining a time $t_3$, where $t_3 > t_2$, at which one beam covering said recalled location will have a power, as determined by the gateway (120, 122), that is at least said predetermined amount of power higher than of any other beam covering said recalled location,

wherein said means for sending the page sends the page over a channel of said one beam at time $t_3$ if said strongest beam at time $t_2$ did not have a power, as determined by the gateway (120, 122), that was at least said predetermined amount of power higher than of any other beam of said group, $g_1$, of beams.

26. The apparatus of claim 25, wherein said one beam is selected from said group $g_1$ of beams including said strongest beam.

27. The apparatus of claim 25, wherein said one beam is selected from any of the total number, m, of beams produced by the one or more satellites.(116, 118).

28. The apparatus of claim 22, wherein said channel of said strongest beam comprises a paging channel.

29. The apparatus of claim 22, wherein said means for determining said group $g_1$ of beams comprises:

means for determining an area, based on said recalled location, within which the UT (124, 126) is assumed to be located at time $t_2$; and
means for determining which of said total number of m beams have a coverage area that covers all locations within said area.

30. The apparatus of claim 29, wherein said area has a defined radius originating at said recalled location, and wherein said defined radius is a function of a time period between time $t_1$ and time $t_2$.

31. The apparatus of claim 29, wherein said strongest beam is a beam of said group $g_1$ of beams that has a highest power, as determined by the gateway, (120, 122), relative to a majority of locations within said area at time $t_2$.

32. The apparatus of claim 31, further comprising:

means for determining a second group $g_2$ of beams, where $g_2 < m$, said second group $g_2$ of beams including all beams that have a coverage area that covers any location within said area; and
means for determining whether or not said strongest beam has a power, as determined by the gateway (120, 122), at all locations within said area that is at least a predetermined amount of power higher than any other beam of said

second group $g_2$ of beams.

33. The apparatus of claim 32, wherein said means for sending the page only sends the page at time $t_2$ if said strongest beam at time $t_2$ has a power, as determined by the gateway (120, 122), at all locations within said area that is at least said predetermined amount of power higher than any other beam of said second group $g_2$ of beams.

34. The apparatus of claim 33, further comprising:

means for determining a time $t_3$, where $t_3 > t_2$, at which one beam covering all locations within said area will have a power, as determined by the gateway (120, 122), at all locations within said area that is at least said predetermined amount of power higher than of any other beam covering any location within said area,

wherein said means for sending the page sends the page over a channel of said one beam at time $t_3$, if said strongest beam at time $t_2$ did not have a power, as determined by the gateway (120, 122), at all locations within said area that was at least said predetermined amount of power higher than of any other beam of said second group $g_2$ of beams.

35. The apparatus of claim 34, wherein said one beam is selected from said group $g_1$ of beams including said strongest beam.

36. The apparatus of claim 34, wherein said one beam is selected from any of the total number of m beams produced by the one or more satellites (116,118).

37. The apparatus of claim 34, wherein said channel of said one beam comprises a paging channel.

38. The apparatus of claim 22, wherein the UT (124, 126) comprises:

means for continually measuring a strength of each of the m beams that cover the UT (124, 126), wherein the beams that cover the UT (124, 126) can change over time, and wherein said strength of each of the beams can change over time; means for continually determining an actual strongest beam, in terms of the received power, of the beams that cover the UT (124, 126), wherein said actual strongest beam can change over time; and means for continually monitoring a channel of said actual strongest beam.

39. The apparatus of claim 34, wherein the UT (124, 126) comprises:

means for continually measuring a strength of each of the m beams that cover the UT (124, 126), wherein the beams that cover the UT (124, 126) can change over time, and wherein said strength of each of the beams can change over time; means for continually determining an actual strongest beam, in terms of the received power, of the beams that cover the UT (124, 126), wherein said actual strongest beam can change over time; and means for continually monitoring a channel of said actual strongest beam.

40. The apparatus of claim 22, wherein the UT (124, 126) comprises:

means for continually determining a current location of the user terminal (124, 126), wherein said current location can change over time; means for continually determining a theoretically strongest beam, as determined by the UT in terms of the received power, based on said current location, wherein said theoretically strongest beam can change over time; and mean for continually monitoring a channel of said theoretically strongest beam.

41. The apparatus of claim 34, wherein the UT (124, 126) comprises:

means for continually determining a current location of the user terminal, wherein said current location can change over time; means for continually determining a theoretically strongest beam, as determined by the UT in terms of the received power, based on said current location, wherein said theoretically strongest beam can change over time; and means for continually monitoring a channel of said theoretically strongest beam.

42. The apparatus of claim 22, wherein the UT (124, 126) comprises:

means for recalling a previous location of the UT (124, 126); means for determining a theoretically strongest beam, as determined by the UT in terms of the received power, based on said recalled location; and means for monitoring a channel of said theoretically strongest beam.

43. The apparatus of claim 22, wherein the apparatus is a gateway (122) and the means for recalling, the means for determining a group, and the means for determining the strongest beam is provided for in the gateway (122).

**44.** A user terminal for receiving a page from a gateway (122) in a satellite communications system (100) having one or more satellites (116, 118), wherein each satellite (116) produces a plurality of beams (140 - 148) and each beam includes a plurality of channels, and wherein the satellites (116, 118) produce a total number of beams m (140 - 152), **characterised by** the user terminal (124, 126) comprising:

means for recalling a location (220) of the user terminal corresponding to a location during which the user terminal (124, 126) previously communicated with the gateway (122);

means for determining (220) a theoretically strongest beam, in terms of the theoretical received power with respect to the recalled location, from said plurality of beams, wherein said theoretically strongest beam can change over time;

means for monitoring (220) a channel of said theoretically strongest beam; and

means for receiving (210-216) the page from the gateway (122) on the channel of said theoretically strongest beam.

**45.** A method for a user terminal to receive a page from a gateway (122) in a satellite communications system (100) having one or more satellites (116, 118), wherein each satellite (116) produces a plurality of beams (140 - 148) and each beam includes a plurality of channels, and wherein the satellites (116. 118) produce a total number of beams m (140 - 152), **characterised by** the method comprising the steps, at the user terminal, of:

recalling a location of the user terminal corresponding to a location during which the user terminal (124, 126) communicated with the gateway (122):

determining (1004) a theoretically strongest beam, in terms of the theoretical received power, with respect to the recalled location from said plurality of beams. wherein said theoretically strongest beam can change over time;

monitoring (1006) a channel of said theoretically strongest beam:

receiving the page from the gateway (122) on the channel of said theoretically strongest beam.

**Patentansprüche**

**1.** Ein Verfahren zum Senden eines Rufs bzw. Page an ein Nutzerterminal (user terminal) UT (124, 126) in einem Satellitenkommunikationssystem (100), das wenigstens ein Gateway (120, 122) und einen oder mehrere Satelliten (116, 118) besitzt, wobei jeder Satellit (116) eine Vielzahl von Strahlen (140-148) produziert und jeder Strahl eine Vielzahl von Kanälen beinhaltet und wobei die Satelliten (116, 118) eine Gesamtzahl von Strahlen m (140-152) produzieren, **gekennzeichnet dadurch, dass** das Verfahren die folgenden Schritte aufweist:

a) Abrufen einer Position des UT (124, 126) entsprechend einer bekannten Position des UT zu einer Zeit $t_1$ (704);

b) basierend auf der Position, Bestimmen einer Gruppe $g_1$ von Strahlen, die die abgerufene Position des UT (124, 126) zu einer Zeit $t_2$ abdeckt, wobei $g_1 < m$ und $t_2 > t_1$ ist (704);

c) Bestimmen eines stärksten Strahls durch Berechnen der theoretischen Empfangsleistung mit Bezug auf die abgerufene Position und zwar von der Gruppe $g_1$ von Strahlen zur Zeit $t_2$, (708); und

d) Senden der Page bzw. des Rundrufs von dem Gateway (120, 122) an das UT (124, 126) auf einem Kanal von dem stärksten Strahl (710).

**2.** Verfahren nach Anspruch 1, wobei der Schritt c) Bestimmen, welcher Strahl von der Gruppe $g_1$ von Strahlen eine höchste Leistung, wie durch das Gateway (120, 122) bestimmt, besitzt, und zwar relativ zu der abgerufenen Position zur Zeit $t_2$, aufweist.

**3.** Verfahren nach Anspruch 2, wobei der Schritt d) nur durchgeführt wird, falls der stärkste Strahl, wie durch das Gateway (120, 122) bestimmt, eine Leistung besitzt, die wenigstens um einen vorher bestimmten Betrag höher ist, als von jedem anderen Strahl von der Gruppe $g_1$ von Strahlen relativ zu der abgerufenen Position.

**4.** Verfahren nach Anspruch 3, das ferner die folgenden Schritte aufweist:

e) Bestimmen einer Zeit $t_3$, wobei $t_3 > t_2$ ist, zu der ein Strahl, der die abgerufene Position abdeckt bzw. versorgt, eine Leistung besitzen wird, wie sie durch das Gateway (120, 122) bestimmt, die wenigstens um den vorherbestimmten Betrag an Leistung höher ist, als von jedem anderen Strahl, der die abgerufene Position abdeckt (714); und

f) Senden der Page über einen Kanal von dem einen Strahl zur Zeit $t_3$ (716), wobei die Schritte e) und f) nur durchgeführt werden, falls der stärkste Strahl zur Zeit $t_2$ nicht eine Leistung besitzt, wie durch das Gateway (120, 122) bestimmt, die wenigstens um den vorherbestimmten Betrag an Leistung höher war, als von jedem anderen Strahl von der Gruppe $g_1$ von Strahlen.

**5.** Verfahren nach Anspruch 4, wobei der eine Strahl aus der Gruppe $g_1$ von Strahlen den stärksten Strahl beinhaltend, ausgewählt wird.

**6.** Verfahren nach Anspruch 4, wobei der eine Strahl von jedem von der Gesamtzahl von m Strahlen, die durch den einen oder die mehreren Satelliten (116, 118) erzeugt werden, ausgewählt wird.

**7.** Verfahren nach Anspruch 1, wobei der Kanal von dem stärksten Strahl einen Rundrufkanal bzw. Paging-Kanal aufweist.

**8.** Verfahren nach Anspruch 1, wobei der Schritt b) Folgendes aufweist:

Bestimmen eines Gebiets (805) basierend auf der abgerufenen Position (704, 804) innerhalb dessen von der UT (124, 126) angenommen wird, dass sie zur Zeit $t_2$ lokalisiert ist; und Bestimmen welcher von der gesamten Zahl von Strahlen m ein Abdeckungsgebiet (806) besitzt, das alle Position innerhalb des Gebiets abdeckt.

**9.** Verfahren nach Anspruch 8, wobei das Gebiet einen definierten Radius (524) besitzt, der an der abgerufenen Position entspringt und wobei der Schritt b) ferner Folgendes aufweist:

Bestimmen einer Zeitperiode zwischen der Zeit $t_1$ und der Zeit $t_2$; und Bestimmen des definierten Radius als eine Funktion von der Zeitperiode.

**10.** Verfahren nach Anspruch 8, wobei der Schritt c) Bestimmen (808) aufweist, welcher von der Gruppe $g_1$ von Strahlen zur Zeit $t_2$ theoretisch eine höchste Leistung relativ zu einer Vielzahl von Positionen innerhalb des Gebiets besitzt.

**11.** Verfahren nach Anspruch 8, wobei der Schritt c) ferner Folgendes aufweist:

Bestimmen einer zweiten Gruppe $g_2$ von Strahlen (809), wobei $g_2 < m$ ist, die zweite Gruppe $g_2$ von Strahlen alle Strahlen beinhaltet, die ein Abdeckungsgebiet besitzen, das jede Position innerhalb des Gebiets abdeckt; und Bestimmen, ob oder ob nicht der stärkste Strahl (810) eine Leistung besitzt, wie durch das Gateway (120, 122) bestimmt, die an allen Positionen innerhalb des Gebiets wenigstens um einen vorherbestimmten Betrag an Leistung höher ist, als von jedem anderen Strahl von der zweiten Gruppe $g_2$ von Strahlen.

**12.** Verfahren nach Anspruch 11, wobei der Schritt d) nur durchgeführt (810) wird, falls ein einzelner Strahl von der Gruppe $g_1$ von Strahlen eine Leistung besitzt, wie durch das Gateway (120, 122) bestimmt, die an allen Positionen innerhalb des Gebiets wenigstens um den vorher bestimmten Betrag an Leistung höher ist, als von jedem anderen Strahl von der zweiten Gruppe $g_2$ von Strahlen.

**13.** Verfahren nach Anspruch 12, das ferner die folgenden Schritte aufweist:

e) Bestimmen zu einer Zeit $t_3$ (814) wobei $t_3 > t_2$ ist, zu der ein Strahl der alle Positionen innerhalb des Gebiets abdeckt eine durch das Gateway (120, 122) bestimmte Leistung besitzen wird, die an allen Positionen innerhalb des Gebiets um wenigstens den vorher bestimmten Betrag an Leistung höher ist, als von jedem anderen Strahl, der irgendeine bzw. jede Position innerhalb des Gebiets abdeckt; f) Senden der Page (816) über einen Kanal von dem einen Strahl zur Zeit $t_3$; und

wobei die Schritte e) und f) nur durchgeführt werden, falls der stärkste Strahl zur Zeit $t_2$ nicht eine durch das Gateway (120, 122) bestimmte Leistung besitzt, die an allen Positionen innerhalb des Gebiets um wenigstens den vorbestimmten Betrag an Leistung höher war, als von jedem anderen Strahl von der zweiten Gruppe $g_2$ von Strahlen.

**14.** Verfahren nach Anspruch 13, wobei der eine Strahl von der Gruppe $g_2$ von Strahlen, den stärksten Strahl beinhaltend, ausgewählt wird.

**15.** Verfahren nach Anspruch 14, wobei der eine Strahl von jedem von der Gesamtzahl m von Strahlen ausgewählt wird, die durch den einen oder die mehreren Satelliten (116, 118) erzeugt werden.

**16.** Verfahren nach Anspruch 13, wobei der Kanal von dem einen Strahl einen Paging- bzw. Rundrufkanal aufweist.

**17.** Verfahren nach Anspruch 1, wobei die Schritte a) bis d) durchgeführt werden, durch das Gateway (120, 122) oder eine Anlage, die in Kommunikation mit dem Gateway (120, 122) steht, und wobei die folgenden Schritte durch das UT (124, 126) ausgeführt werden:

kontinuierliches Messen der Stärke, im Hinblick auf die Empfangsleistung von jedem von den m Strahlen die das UT (124, 126) abdecken, wobei die Strahlen, die das UT (124, 126) abdecken sich über die Zeit ändern können und wobei die Stärke von jedem von den Strahlen sich über die Zeit ändern kann; kontinuierliches Bestimmen eines gegenwärtig stärksten Strahls (724) im Hinblick auf die Empfangsleistung, von den Strahlen, die das UT (124, 126) abdecken, wobei der gegenwärtig stärkste Strahl sich über die Zeit ändern kann; und

kontinuierliches Überwachen eines Kanals von dem gegenwärtig stärksten Strahl (726).

18. Verfahren nach Anspruch 13, wobei die Schritte a) bis f) durchgeführt werden durch das Gateway (120, 122) oder eine Anlage, die in Kommunikation mit dem Gateway (120, 122) steht, und wobei die folgenden Schritte durch das UT (124, 126) durchgeführt werden:

kontinuierliches Messen einer Stärke, im Hinblick auf die Empfangsleistung, von jedem von den m Strahlen, die das UT (124, 126) abdecken, wobei die Strahlen, die das UT (124, 126) abdecken, sich über die Zeit ändern können, und wobei die Stärke von jedem der Strahlen sich über die Zeit ändern kann; kontinuierliches Bestimmen eines gegenwärtig stärksten Strahls (724), im Hinblick auf die Empfangsleistung, von den Strahlen, die das UT (124, 126) abdecken, wobei der gegenwärtig stärkste Strahl sich über die Zeit ändern kann; und kontinuierliches Überwachen eines Kanals von dem gegenwärtig stärksten Strahl (726).

19. Verfahren nach Anspruch 1, wobei die Schritte a) bis d) durchgeführt werden an dem Gateway (120, 122) oder einer Anlage, die in Kommunikation mit dem Gateway (120, 122) steht und wobei die folgenden Schritte durch das UT (124, 126) durchgeführt werden:

kontinuierliches Bestimmen einer momentanen Position des Nutzerterminals (124, 126) wobei die momentane Position sich über die Zeit ändern kann; kontinuierliches Bestimmen eines theoretisch stärksten Strahls (904) wie durch das UT (124, 126) im Hinblick auf die Empfangsleistung bestimmt wurde, basierend auf der momentanen Position, wobei der theoretisch stärkste Strahl sich über Zeit ändern kann; und kontinuierliches Überwachen eines Kanals von dem theoretisch stärksten Strahl (906).

20. Verfahren nach Anspruch 13, wobei die Schritte a) bis f) durchgeführt werden durch das Gateway (120, 122) oder eine Anlage, die sich in Kommunikation mit dem Gateway (120, 122) befindet und wobei die folgenden Schritte durch das UT (124, 126) durchgeführt werden:

kontinuierliches Bestimmen einer momentanen Position des Nutzerterminals (124, 126) wobei die momentane Position sich über die Zeit ändern kann; kontinuierliches Bestimmen eines theoretisch stärksten Strahls (904) wie durch das:UT (124, 126) im Hinblick auf die Empfangsleistung bestimmt wurde, basierend auf der momentanen Position; wobei der theoretisch stärkste Strahl sich über die Zeit ändern kann; und kontinuierliches Überwachen eines Kanals (906) von dem theoretisch stärksten Strahl.

21. Verfahren nach Anspruch 1, wobei die Schritte a) bis d) durchgeführt werden durch das Gateway oder eine Anlage, die in Kommunikation mit dem Gateway steht und wobei die folgenden Schritte durch das UT (124, 126) zur Zeit $t_2$ durchgeführt werden:

Abrufen einer Position des UT (124, 126) zur Zeit $t_1$; Bestimmen eines theoretisch stärksten Strahls (904) wie durch das UT (124, 126) im Hinblick auf die Empfangsleistung bestimmt wurde, basierend auf der abgerufenen Position; und Überwachen eines Kanals (906) von dem theoretisch stärksten Strahl zur Zeit $t_2$.

22. Eine Vorrichtung (100) zum Senden eines Rufs bzw. Page an ein Nutzerterminal UT, (124, 126) in einem Satellitenkommunikationssystem, das ein Gateway (120, 122) und einen oder mehrere Satelliten (116, 118) besitzt, wobei jeder Satellit (118) eine Vielzahl von Strahlen (140-148) erzeugt und jeder Strahl eine Vielzahl von Kanälen beinhaltet, und wobei der eine oder die mehreren Satelliten (116, 118) eine Gesamtzahl von m Strahlen (140-152) erzeugen, wobei die Vorrichtung Folgendes aufweist:

Mittel zum Abrufen einer Position von dem UT (124, 126) wobei die abgerufene Position einer bekannten Position von dem UT (124, 126) zu einer Zeit $t_1$ entspricht; Mittel zum Bestimmen, basierend auf der Position, einer Gruppe $g_1$ von Strahlen, die die abgerufene Position von dem UT (124, 126) zu einer Zeit $t_2$ abdeckt, wobei $g_1 < m$ und $t_2 > t_1$ ist; Mittel zum Bestimmen eines stärksten Strahls, durch Berechnen der theoretischen Empfangsleistung mit Bezug auf die abgerufene Position, von der Gruppe $g_1$ von Strahlen zur Zeit $t_2$; und Mittel zum Senden der Page von dem Gateway (120; 122) an das UT (124, 126) auf einem Kanal von dem stärksten Strahl.

23. Vorrichtung nach Anspruch 22, wobei der stärkste Strahl ein Strahl von der Gruppe $g_1$ von Strahlen ist, der eine höchste Leistung besitzt, wie durch das Gateway (120, 122) bestimmt wurde und zwar relativ zu der abgerufenen Position zur Zeit $t_2$.

**24.** Vorrichtung nach Anspruch 23, wobei die Mittel zum Senden der Page nur die Page zur Zeit $t_2$ senden, falls der stärkste Strahl eine Leistung besitzt, wie durch das Gateway (120, 122) bestimmt, die wenigstens um einen vorherbestimmten Betrag an Leistung höher ist, als von jedem anderen Strahl von der Gruppe $g_1$ von Strahlen relativ zu der abgerufenen Position.

**25.** Vorrichtung nach Anspruch 24, das ferner Folgendes aufweist:

Mittel zum Bestimmen einer Zeit $t_3$ wobei $t_3 > t_2$ ist, zu der ein Strahl der die abgerufene Position abdeckt eine durch das Gateway (120, 122) bestimmte Leistung besitzen wird, die wenigstens um den vorherbestimmten Betrag an Leistung höher ist, als von jedem anderen Strahl, der die abgerufene Position abdeckt;

wobei die Mittel zum Senden der Page, den Page über einen Kanal von dem einen Strahl zur Zeit $t_3$ senden, falls der stärkste Strahl zur Zeit $t_2$ nicht eine Leistung besitzt, wie durch das Gateway (120, 122) bestimmt, die wenigstens um den vorherbestimmten Betrag an Leistung höher war, als von jedem anderen Strahl von der Gruppe $g_1$ von Strahlen.

**26.** Vorrichtung nach Anspruch 25, wobei der eine Strahl von der Gruppe $g_1$ von Strahlen, den stärksten Strahl beinhaltend, ausgewählt wird.

**27.** Vorrichtung nach Anspruch 25, wobei der eine Strahl von jedem von der Gesamtzahl m von Strahlen ausgewählt wird, die durch den einen oder die mehreren Satelliten (116, 118) erzeugt werden.

**28.** Vorrichtung nach Anspruch 22, wobei der Kanal von dem stärksten Strahl einen Paging- bzw. Rundruf-Kanal aufweist.

**29.** Vorrichtung nach Anspruch 22, wobei die Mittel zum Bestimmen der Gruppe $g_1$ von Strahlen Folgendes aufweisen:

Mittel zum Bestimmen eines Gebiets, basierend auf der abgerufenen Position, innerhalb dessen von dem UT (124, 126) angenommen wird, dass es zu einer Zeit $t_2$ lokalisiert sei; und Mittel zum Bestimmen welcher von der Gesamtzahl von m Strahlen ein Abdeckungsgebiet besitzt, das alle Positionen innerhalb des Gebiets abdeckt.

**30.** Vorrichtung nach Anspruch 29, wobei das Gebiet einen definierten Radius besitzt, der an der abgerufenen Position entspringt, und wobei der definierte Radius eine Funktion von einer Zeitperiode zwischen der Zeit $t_1$ und der Zeit $t_2$ ist.

**31.** Vorrichtung nach Anspruch 29, wobei der stärkste Strahl ein Strahl von der Gruppe $g_1$ von Strahlen ist, der eine höchste Leistung besitzt, wie durch das Gateway (120, 122) bestimmt, und zwar relativ zu einer Vielzahl von Positionen innerhalb des Gebiets zur Zeit $t_2$.

**32.** Vorrichtung nach Anspruch 31, das ferner Folgendes aufweist:

Mittel zum Bestimmen einer zweiten Gruppe $g_2$ von Strahlen, wobei $g_2 < m$ ist, wobei die zweite Gruppe $g_2$ von Strahlen alle Strahlen beinhaltet, die ein Abdeckungsgebiet besitzen, das jede Position innerhalb des Gebiets abdeckt; und Mittel zum Bestimmen, ob oder ob nicht der stärkste Strahl eine Leistung besitzt, wie durch das Gateway (120, 122) bestimmt, die an allen Positionen innerhalb des Gebiets um wenigstens einen vorherbestimmten Betrag einer Leistung höher ist, als von jedem anderen Strahl von der zweiten Gruppe $g_2$ von Strahlen.

**33.** Vorrichtung nach Anspruch 32, wobei die Mittel zum Senden der Page nur den Page zur Zeit $t_2$ senden, falls der stärkste Strahl zur Zeit $t_2$ eine Leistung besitzt, wie durch das Gateway (120, 122) bestimmt, die an allen Positionen innerhalb des Gebiets, um wenigstens den vorher bestimmten Betrag an Leistung höher ist, als von jedem anderen Strahl von der zweiten Gruppe $g_2$ von Strahlen.

**34.** Vorrichtung nach Anspruch 33, das ferner Folgendes aufweist:

Mittel zum Bestimmen einer Zeit $t_3$, wobei $t_3 > t_2$ ist, zu der ein Strahl, der alle Positionen innerhalb des Gebiets abdeckt eine Leistung besitzen wird, wie durch das Gateway (120, 122) bestimmt, die an allen Positionen innerhalb des Gebiets um wenigstens den vorher bestimmten Betrag an Leistung höher ist, als von jedem anderen Strahl, der irgendeine bzw. jede Position innerhalb des Gebiets abdeckt, wobei die Mittel zum Senden der Page, den Page über einen Kanal von dem einen Strahl zur Zeit $t_3$ senden, falls der stärkste Strahl zur Zeit $t_2$ nicht eine Leistung besitzt, wie durch das Gateway (120, 122) bestimmt, die an allen Positionen innerhalb des Gebiets wenigstens um den vorherbestimmten Betrag an Leistung höher war, als von jedem anderen Strahl von der zweiten Gruppe $g_2$ von Strahlen.

**35.** Vorrichtung nach Anspruch 34, wobei der eine Strahl von der Gruppe $g_1$ von Strahlen, den stärksten Strahl beinhaltend, ausgewählt wird.

**36.** Vorrichtung nach Anspruch 34, wobei der eine Strahl von jedem von der Gesamtzahl von m Strahlen ausgewählt wird, die durch den einen oder die mehreren Satelliten (116, 118) erzeugt werden.

**37.** Vorrichtung nach Anspruch 34, wobei der Kanal von dem einen Strahl einen Rundruf- bzw. Paging-Kanal aufweist.

**38.** Vorrichtung nach Anspruch 22, wobei das UT (124, 126) Folgendes aufweist:

Mittel zum kontinuierlichen Messen einer Stärke von jedem von den m Strahlen, die das UT (124, 126) abdecken, wobei die Strahlen die das UT (124, 126) abdecken, sich über die Zeit ändern können, und wobei die Stärke von jedem von den Strahlen sich über die Zeit ändern kann;
Mittel zum kontinuierlichen Bestimmen eines gegenwärtig stärksten Strahls im Hinblick auf die Empfangsleistung, von den Strahlen, die das UT (124, 126) abdecken, wobei der gegenwärtig stärkste Strahl sich über die Zeit ändern kann; und
Mittel zum kontinuierlichen Überwachen eines Kanals von dem gegenwärtig stärksten Strahl.

**39.** Vorrichtung nach Anspruch 34, wobei das UT (124, 126) Folgendes aufweist:

Mittel zum kontinuierlichen Messen einer Stärke von jedem von den m Strahlen, die das UT (124, 126) abdecken, wobei die Strahlen, die das UT (124, 126) abdecken, sich über die Zeit ändern können, und wobei die Stärke von jedem von den Strahlen sich über die Zeit ändern kann;
Mittel zum kontinuierlichen Bestimmen eines gegenwärtig stärksten Strahls, im Hinblick auf die Empfangsleistung, von den Strahlen die das UT (124, 126) abdekken, wobei der gegenwärtig stärkste Strahl sich über die Zeit ändern kann; und
Mittel zum kontinuierlichen Überwachen eines Kanals von dem gegenwärtig stärksten Strahl.

**40.** Vorrichtung nach Anspruch 22, wobei das UT (124, 126) Folgendes aufweist:

Mittel zum kontinuierlichen Bestimmen einer momentanen Position von dem Nutzerterminal (124, 126), wobei die momentane Position sich über die Zeit ändern kann;
Mittel zum kontinuierlichen Bestimmen eines theoretisch stärksten Strahls, wie durch das UT im Hinblick auf die Empfangsleistung bestimmt, basierend auf der momentanen Position, wobei der theoretisch stärkste Strahl sich über die Zeit ändern kann; und
Mittel zum kontinuierlichen. Überwachen eines Kanals von dem theoretisch stärksten Strahl.

**41.** Vorrichtung nach Anspruch 34, wobei das UT (124, 126) Folgendes aufweist:

Mittel zum kontinuierlichen Bestimmen einer momentanen Position von dem Nutzerterminal, wobei die momentane Position sich über die Zeit ändern kann;
Mittel zum kontinuierlichen Bestimmen eines theoretischen stärksten Strahls, wie durch das UT im Hinblick auf die Empfangsleistung bestimmt, basierend auf der momentanen Position, wobei der theoretisch stärkste Strahl sich über die Zeit ändern kann; und
Mittel zum kontinuierlichen Überwachen eines Kanals von dem theoretisch stärksten Strahl.

**42.** Vorrichtung nach Anspruch 22, wobei das UT (124, 126) Folgendes aufweist:

Mittel zum Abrufen einer vorherigen Position des UT (124, 126);
Mittel zum Bestimmen eines theoretisch stärksten Strahls, wie durch das
UT im Hinblick auf die Empfangsleistung bestimmt und zwar basierend auf der abgerufenen Position; und
Mittel zum Überwachen eines Kanals von dem theoretisch stärksten Strahl.

**43.** Vorrichtung nach Anspruch 22, wobei die Vorrichtung ein Gateway (122) ist und die Mittel zum Abrufen, die Mittel zum Bestimmen einer Gruppe und die Mittel zum Bestimmen des stärksten Strahls in dem Gateway (122) vorgesehen sind.

**44.** Ein Nutzerterminal zum Empfangen eines Rufs bzw. Page von einem Gateway (122) in einem Satellitenkommunikationssystem (100), das einen oder mehrere Satelliten (116, 118) besitzt, wobei jeder Satellit (116) eine Vielzahl von Strahlen (140-148) erzeugt und jeder Strahl eine Vielzahl von Kanälen beinhaltet und wobei die Satelliten (116, 118) eine Gesamtzahl von Strahlen m (140-152) erzeugen, **dadurch gekennzeichnet, dass** das Nutzerterminal (124, 126) Folgendes aufweist:

Mittel zum Abrufen einer Position (220) von dem Nutzerterminal entsprechend einer Position bei der das Nutzerterminal (124, 126) zuvor mit dem Gateway (122) kommunizierte;
Mittel zum Bestimmen (220) eines theoretisch stärksten Strahls bezüglich der theoretischen empfangenen Leistung mit Bezug auf die abgerufene Position und zwar aus der Vielzahl von Strahlen, wobei sich der theoretisch stärkste Strahl über die Zeit ändern kann;

Mittel zum Überwachen (220) eines Kanals von den theoretisch stärksten Strahl; und

Mittel zum Empfangen (210-216) des Rufs von dem Gateway (122) auf dem Kanal von dem theoretisch stärksten Strahl.

45. Ein Verfahren für ein Nutzerterminal zum Empfangen eines Rufs bzw. Page von einem Gateway (122) in einem Satellitenkommunikationssystem (100) das einen oder mehrere Satelliten (116, 118) besitzt, wobei jeder Satellit (116) eine Vielzahl von Strahlen (140-148) erzeugt und jeder Strahl eine Vielzahl von Kanälen beinhaltet und wobei die Satelliten (116, 118) eine Gesamtzahl von Strahlen m (140-152) erzeugen, **dadurch gekennzeichnet, dass** das Verfahren an dem Nutzerterminal die folgenden Schritte aufweist:

Abrufen einer Position von dem Nutzerterminal entsprechend einer Position bei der das Nutzerterminal (124, 126) mit dem Gateway (122) kommunizierte;

Bestimmen (1004) eines theoretisch stärksten Strahls bezüglich der theoretischen empfangenen Leistung mit Bezug auf die abgerufene Position von der Vielzahl von Strahlen, wobei sich der theoretisch stärkste Strahl über die Zeit ändern kann;

Überwachen (1006) eines Kanals von dem theoretisch stärksten Strahl; Empfangen des Rufs von dem Gateway (122) auf dem Kanal von dem theoretisch stärksten Strahl.

**Revendications**

1. Procédé d'envoi d'une page à un terminal utilisateur, UT, (124, 126) dans un système de communications par satellites (100) ayant au moins une passerelle (120, 122) et un ou plusieurs satellites (116, 118), dans lequel chaque satellite (116) produit une pluralité de faisceaux (140 - 148) et chaque faisceau comprend une pluralité de canaux, et dans lequel les satellites (116, 118) produisent un nombre total de faisceaux m (140 - 152), **caractérisé par le fait que** le procédé comprend les étapes consistant à :

a) rappeler un emplacement de l'UT (124, 126) correspondant à un emplacement connu de l'UT à un instant $t_1$, (704) ;
b) déterminer, sur la base dudit emplacement, un groupe $g_1$ de faisceaux qui couvrent ledit emplacement rappelé de l'UT (124, 126) à un ins-

tant $t_2$, où $g_1 < m$ et $t_2 > t_1$, (704) ;
c) déterminer un faisceau le plus fort, en calculant la puissance reçue théorique en ce qui concerne l'emplacement rappelé, dudit groupe $g_1$ de faisceaux à l'instant $t_2$, (708) ; et
d) envoyer la page à partir de la passerelle (120, 122) à l'UT (124, 126) sur un canal dudit faisceau le plus fort, (710).

2. Procédé selon la revendication 1, dans lequel l'étape c) comprend la détermination du faisceau, parmi ledit groupe de faisceaux $g_1$, qui présente la puissance la plus élevée, comme le détermine la passerelle (120, 122), relativement audit emplacement rappelé à l'instant $t_2$.

3. Procédé selon la revendication 2, dans lequel l'étape d) n'est exécutée que si ledit faisceau le plus fort, comme le détermine la passerelle (120, 122), présente une puissance qui est au moins une quantité prédéterminée plus élevée que celle de chaque autre faisceau dudit groupe $g_1$ de faisceaux relativement audit emplacement rappelé.

4. Procédé selon la revendication 3, comprenant de plus les étapes consistant à :

e) déterminer un instant $t_3$, où $t_3 > t_2$, où un faisceau qui couvre ledit emplacement rappelé, présentera une puissance, comme le détermine la passerelle (120, 122), qui est au moins ladite quantité de puissance prédéterminée plus élevée que celle de n'importe quel autre faisceau qui couvre ledit emplacement rappelé (714) ; et
f) envoyer la page sur un canal dudit un faisceau à l'instant $t_3$ (716), dans lequel les étapes e) et f) ne sont exécutées que si ledit faisceau le plus fort à l'instant $t_2$, ne présentait pas une puissance, comme le détermine la passerelle (120, 122), qui était au moins ladite quantité de puissance prédéterminée plus élevée que celle de n'importe quel autre faisceau dudit groupe de faisceaux $g_1$.

5. Procédé selon la revendication 4, dans lequel ledit un faisceau est choisi parmi ledit groupe de faisceaux $g_1$ qui comprend ledit faisceau le plus fort.

6. Procédé selon la revendication 4, dans lequel ledit un faisceau est choisi comme étant n'importe lequel parmi le nombre total de faisceaux m produits par le ou les satellites (116, 118).

7. Procédé selon la revendication 1, dans lequel ledit canal dudit faisceau le plus fort comprend un canal de téléappel.

8. Procédé selon la revendication 1, dans lequel l'étape b) comprend :

la détermination d'une zone (805), sur la base dudit emplacement rappelé (704, 804), à l'intérieur de laquelle on suppose que l'UT (124, 126) se situe à l'instant $t_2$ ; et

la détermination de ceux parmi ledit nombre total de faisceaux m, qui présentent une zone de couverture (806) qui couvre tous les emplacements à l'intérieur de ladite zone.

9. Procédé selon la revendication 8, dans lequel ladite zone présente un rayon défini (524) qui commence au niveau dudit emplacement rappelé et dans lequel l'étape b) comprend de plus :

la détermination d'une période de temps entre l'instant $t_1$ et l'instant $t_2$ ; et

la détermination dudit rayon défini comme étant une fonction de ladite période de temps.

10. Procédé selon la revendication 8, dans lequel l'étape c) comprend la détermination (808) de celui dudit de groupe $g_1$ de faisceaux à l'instant $t_2$ qui présente théoriquement la puissance la plus élevée relativement à une majorité d'emplacements à l'intérieur de ladite zone.

11. Procédé selon la revendication 8, dans lequel l'étape c) comprend de plus :

la détermination d'un deuxième groupe de faisceaux $g_2$ (809), où $g_2 < m$, ledit deuxième groupe de faisceaux $g_2$ comprenant tous les faisceaux qui présentent une zone de couverture qui couvre n'importe quel emplacement à l'intérieur de ladite zone ; et

la détermination permettant de savoir si ledit faisceau le plus fort (810) présente une puissance, comme le détermine la passerelle (120, 122), au niveau de tous les emplacements situés à l'intérieur de ladite zone, qui est au moins égale à une quantité de puissance prédéterminée plus élevée que celle de n'importe quel autre faisceau dudit deuxième groupe de faisceaux $g_2$.

12. Procédé selon la revendication 11, dans lequel l'étape d) n'est exécutée (810) que si un seul faisceau dudit groupe de faisceaux $g_1$ présente une puissance, comme le détermine la passerelle (120, 122), au niveau de tous les emplacements situés à l'intérieur de ladite zone, qui est au moins égale à ladite quantité de puissance prédéterminée plus élevée que celle de n'importe quel autre faisceau dudit deuxième groupe de faisceaux $g_2$.

13. Procédé selon la revendication 12, comprenant de plus les étapes consistant à:

e) déterminer un instant $t_3$ (814), où $t_3 > t_2$, où un faisceau qui couvre tous les emplacements situés à l'intérieur de ladite zone, présentera une puissance, comme le détermine la passerelle (120, 122), au niveau de tous les emplacements situés à l'intérieur de ladite zone, qui est au moins égale à ladite quantité de puissance prédéterminée plus élevée que celle de n'importe quel autre faisceau qui couvre n'importe quel emplacement situé à l'intérieur de ladite zone ;

f) envoyer la page (816) sur un canal dudit un faisceau à l'instant $t_3$; et dans lequel les étapes e) et f) ne sont exécutées que si ledit faisceau le plus fort à l'instant $t_2$ ne présentait pas une puissance, comme le détermine la passerelle (120, 122), au niveau de tous les emplacements situés à l'intérieur de ladite zone, qui était au moins égale à ladite quantité de puissance prédéterminée plus élevée que celle de n'importe quel autre faisceau dudit deuxième groupe de faisceaux $g_2$.

14. Procédé selon la revendication 13, dans lequel ledit un faisceau est choisi parmi ledit groupe de faisceaux $g_2$ qui comprend ledit faisceau le plus fort.

15. Procédé selon la revendication 14, dans lequel ledit un faisceau est choisi comme étant n'importe lequel parmi le nombre total de faisceaux m produits par le ou les satellites (116, 118).

16. Procédé selon la revendication 13, dans lequel ledit canal dudit un faisceau comprend un canal de téléappel.

17. Procédé selon la revendication 1, dans lequel les étapes a) à d) sont exécutées par la passerelle (120, 122) ou une installation en communication avec la passerelle (120, 122), et dans lequel les étapes qui suivent sont exécutées par l'UT (124, 126) :

mesurer de manière permanente la force, en termes de puissance reçue, de chacun des m faisceaux qui couvrent l'UT (124, 126), dans lequel les faisceaux qui couvrent l'UT (124, 126) peuvent changer au cours du temps, et dans lequel ladite force de chacun des faisceaux peut changer au cours du temps ;

déterminer de manière permanente le faisceau réel le plus fort (724), en termes de puissance reçue, parmi les faisceaux qui couvrent l'UT (124, 126), dans lequel ledit faisceau réel le plus fort peut changer au cours du temps ; et

surveiller de manière permanente un canal dudit faisceau réel le plus fort (726).

**18.** Procédé selon la revendication 13, dans lequel les étapes a) à f) sont exécutées par la passerelle (120, 122) ou une installation en communication avec la passerelle (120, 122), et dans lequel les étapes qui suivent sont exécutées par l'UT (124, 126) :

mesurer de manière permanente la force, en termes de puissance reçue, de chacun des m faisceaux qui couvrent l'UT (124, 126), dans lequel les faisceaux qui couvrent l'UT (124, 126) peuvent changer au cours du temps, et dans lequel ladite force de chacun des faisceaux peut changer au cours du temps ;
déterminer de manière permanente le faisceau réel le plus fort (724), en termes de puissance reçue, parmi les faisceaux qui couvrent l'UT (124, 126), dans lequel ledit faisceau réel le plus fort peut changer au cours du temps ; et
surveiller de manière permanente un canal dudit faisceau réel le plus fort (726).

**19.** Procédé selon la revendication 1, dans lequel les étapes a) à d) sont exécutées au niveau de la passerelle (120, 122) ou d'une installation en communication avec la passerelle (120, 122), et dans lequel les étapes qui suivent sont exécutées par l'UT (124, 126) :

déterminer de manière permanente l'emplacement actuel du terminal utilisateur (124, 126), dans lequel ledit emplacement actuel peut changer au cours du temps ;
déterminer de manière permanente le faisceau théoriquement le plus fort (904), comme le détermine l'UT (124, 126) en termes de puissance reçue, sur la base dudit emplacement actuel, dans lequel ledit faisceau théoriquement le plus fort peut changer au cours du temps ; et
surveiller de manière permanente un canal dudit faisceau théoriquement le plus fort (906).

**20.** Procédé selon la revendication 13, dans lequel les étapes a) à f) sont exécutées par la passerelle (120, 122) ou une installation en communication avec la passerelle (120, 122), et. dans lequel les étapes qui suivent sont exécutées par l'UT (124, 126) :

déterminer de manière permanente l'emplacement actuel du terminal utilisateur (124, 126), dans lequel ledit emplacement actuel peut changer au cours du temps ;
déterminer de manière permanente le faisceau théoriquement le plus fort (904), comme le détermine l'UT (124, 126) en termes de puissance reçue, sur la base dudit emplacement actuel, dans lequel ledit faisceau théoriquement le plus fort peut changer au cours du temps ; et
surveiller de manière permanente un canal (906) dudit faisceau théoriquement le plus fort.

**21.** Procédé selon la revendication 1, dans lequel les étapes a) à d) sont exécutées par la passerelle ou une installation en communication avec la passerelle, et dans lequel les étapes qui suivent sont exécutées par l'UT (124, 126) à l'instant $t_2$ :

rappeler un emplacement de l'UT (124, 126) à l'instant $t_1$ ;
déterminer le faisceau théoriquement le plus fort (904), comme le détermine l'UT (124, 126) en termes de puissance reçue, sur la base dudit emplacement rappelé ; et
surveiller un canal (906) dudit faisceau théoriquement à l'instant $t_2$.

**22.** Dispositif (100) d'envoi d'une page à un terminal utilisateur, UT, (124, 126) dans un système de communications par satellites ayant une passerelle (120, 122) et un ou plusieurs satellites (116, 118), dans lequel chaque satellite (118) produit une pluralité de faisceaux (140 - 148) et chaque faisceau comprend une pluralité de canaux, et dans lequel le ou les satellites (116, 118) produisent un nombre total de faisceaux m (140 - 152), le dispositif comprenant :

des moyens de rappel d'un emplacement de l'UT (124, 126), ledit emplacement rappelé correspondant à un emplacement connu de l'UT (124, 126) à un instant $t_1$ ;
des moyens de détermination, sur la base dudit emplacement, d'un groupe de faisceaux $g_1$ qui couvre ledit emplacement rappelé de l'UT (124, 126) à un instant $t_2$, où $g_1 < m$ et $t_2 > t_1$ ;
des moyens de détermination du faisceau le plus fort, en calculant la puissance reçue théorique en ce qui concerne l'emplacement rappelé, dudit groupe de faisceaux $g_1$ à l'instant $t_2$ ; et
des moyens d'envoi de la page à partir de la passerelle (120, 122) jusqu'à l'UT (124, 126) sur un canal dudit faisceau le plus fort.

**23.** Dispositif selon la revendication 22, dans lequel ledit faisceau le plus fort est un faisceau qui appartient audit groupe de faisceaux $g_1$ et qui présente la puissance la plus élevée, comme le détermine la passerelle (120, 122), relativement audit emplacement rappelé à l'instant $t_2$.

**24.** Dispositif selon la revendication 23, dans lequel lesdits moyens d'envoi de la page, n'envoient la page à l'instant $t_2$, que si ledit faisceau le plus fort présente une puissance, comme le détermine la passerelle (120, 122), qui est au moins égale à une quantité de puissance prédéterminée plus élevée que celle de chaque autre faisceau dudit groupe de faisceaux $g_1$ relativement audit emplacement rappelé.

**25.** Dispositif selon la revendication 24, comprenant de plus :

des moyens de détermination d'un instant $t_3$, où $t_3 > t_2$, où un faisceau qui couvre ledit emplacement rappelé présentera une puissance, comme le détermine la passerelle (120, 122), qui est au moins égale à ladite quantité de puissance prédéterminée plus élevée que celle de n'importe quel autre faisceau qui couvre ledit emplacement rappelé ;

dans lequel lesdits moyens d'envoi de la page, envoient la page sur un canal dudit un faisceau à l'instant $t_3$ si ledit faisceau le plus fort à l'instant $t_2$ ne présentait pas une puissance, comme le détermine la passerelle (120, 122), qui était au moins égale à ladite quantité de puissance prédéterminée plus élevée que celle de n'importe quel autre faisceau dudit groupe de faisceaux $g_1$.

**26.** Dispositif selon la revendication 25, dans lequel ledit un faisceau est choisi parmi ledit groupe de faisceaux $g_1$ qui comprend ledit faisceau le plus fort.

**27.** Dispositif selon la revendication 25, dans lequel ledit un faisceau est choisi comme étant n'importe lequel parmi le nombre total, m, de faisceaux produits par le ou les satellites (116, 118).

**28.** Dispositif selon la revendication 22, dans lequel ledit canal dudit faisceau le plus fort comprend un canal de téléappel.

**29.** Dispositif selon la revendication 22, dans lequel lesdits moyens de détermination dudit groupe de faisceaux $g_1$ comprend :

des moyens de détermination d'une zone, sur la base dudit emplacement rappelé, à l'intérieur de laquelle on suppose que l'UT (124, 126) se situe à l'instant $t_2$ ; et
des moyens de détermination de ceux parmi ledit nombre total, m, de faisceaux qui présentent une zone de couverture qui couvre tous les emplacements à l'intérieur de ladite zone.

**30.** Dispositif selon la revendication 29, dans lequel ladite zone présente un rayon défini qui commence au niveau dudit emplacement rappelé, et dans lequel ledit rayon défini est une fonction d'une période de temps comprise entre l'instant $t_1$ et l'instant $t_2$.

**31.** Dispositif selon la revendication 29, dans lequel ledit faisceau le plus fort est un faisceau qui appartient audit groupe de faisceaux $g_1$ et qui présente la puissance la plus élevée, comme le détermine la passerelle (120, 122), relativement à une majorité d'emplacements situés à l'intérieur de ladite zone à l'instant $t_2$.

**32.** Dispositif selon la revendication 31, comprenant de plus :

des moyens de détermination d'un deuxième groupe de faisceaux $g_2$, où $g_2 < m$, ledit deuxième groupe de faisceaux $g_2$ comprenant tous les faisceaux qui présentent une zone de couverture qui couvre n'importe quel emplacement à l'intérieur de ladite zone ; et
des moyens de détermination du fait que ledit faisceau le plus fort présente ou pas une puissance, comme le détermine la passerelle (120, 122), au niveau de tous les emplacements situés à l'intérieur de ladite zone, qui est au moins égale à une quantité de puissance prédéterminée plus élevée que celle de n'importe quel autre faisceau dudit deuxième groupe de faisceaux $g_2$.

**33.** Dispositif selon la revendication 32, dans lequel lesdits moyens d'envoi de la page n'envoient la page à l'instant $t_2$, que si ledit faisceau le plus fort à l'instant $t_2$ présente une puissance, comme le détermine la passerelle (120, 122), au niveau de tous les emplacements situés à l'intérieur de ladite zone, qui est au moins égale à ladite quantité de puissance prédéterminée plus élevée que celle de n'importe quel autre faisceau dudit deuxième groupe de faisceaux $g_2$.

**34.** Dispositif selon la revendication 33, comprenant de plus :

des moyens de détermination d'un instant $t_3$, où $t_3 > t_2$, où un faisceau qui couvre tous les emplacements situés à l'intérieur de ladite zone, présentera une puissance, comme le détermine la passerelle (120, 122), au niveau de tous les emplacements situés à l'intérieur de ladite zone, qui est au moins égale à ladite quantité de puissance prédéterminée plus élevée que celle de n'importe quel autre faisceau qui couvre n'importe quel emplacement situé à l'intérieur de ladite zone,

dans lequel lesdits moyens d'envoi de la page, envoient la page sur un canal dudit un faisceau à l'instant $t_3$, si ledit faisceau le plus fort à l'instant $t_2$ ne présentait pas une puissance, comme le détermine la passerelle (120, 122), au niveau de tous les emplacements situés à l'intérieur de la dite zone, qui était au moins égale à ladite quantité de puissance prédéterminée plus élevée que celle de n'importe quel autre faisceau dudit deuxième groupe de faisceaux $g_2$.

**35.** Dispositif selon la revendication 34, dans lequel ledit un faisceau est choisi parmi ledit groupe de faisceaux $g_1$ qui comprend ledit faisceau le plus fort.

**36.** Dispositif selon la revendication 34, dans lequel ledit un faisceau est choisi comme étant n'importe lequel parmi le nombre total de m faisceaux produits par le ou les satellites (116, 118).

**37.** Dispositif selon la revendication 34, dans lequel ledit canal dudit un faisceau comprend un canal de téléappel.

**38.** Dispositif selon la revendication 22, dans lequel l'UT (124, 126) comprend :

des moyens de mesure, de manière permanente, de la force de chacun des m faisceaux qui couvrent l'UT (124, 126), dans lequel les faisceaux qui couvrent l'UT (124, 126) peuvent changer au cours du temps, et dans lequel ladite force de chacun des faisceaux peut changer au cours du temps ;

des moyens de détermination, de manière permanente, du faisceau réel le plus fort, en termes de puissance reçue, parmi les faisceaux qui couvrent l'UT (124, 126), dans lequel ledit faisceau réel le plus fort peut changer au cours du temps ; et

des moyens de surveillance, de manière permanente, d'un canal dudit faisceau réel le plus fort.

**39.** Dispositif selon la revendication 34, dans lequel l'UT (124, 126) comprend :

des moyens de mesure, de manière permanente, de la force de chacun des m faisceaux qui couvrent l'UT (124, 126), dans lequel les faisceaux qui couvrent l'UT (124, 126) peuvent changer au cours du temps, et dans lequel ladite force de chacun des faisceaux peut changer au cours du temps ;

des moyens de détermination, de manière permanente, du faisceau réel le plus fort, en termes de puissance reçue, parmi les faisceaux qui couvrent l'UT (124, 126), dans lequel ledit faisceau réel le plus fort peut changer au cours du temps ; et

des moyens de surveillance, de manière permanente, d'un canal dudit faisceau réel le plus fort.

**40.** Dispositif selon la revendication 22, dans lequel l'UT (124, 126) comprend :

des moyens de détermination, de manière permanente, de l'emplacement actuel du terminal utilisateur (124, 126), dans lequel ledit emplacement actuel peut changer au cours du temps ;

des moyens de détermination, de manière permanente, du faisceau théoriquement le plus fort, comme le détermine l'UT en termes de puissance reçue, sur la base dudit emplacement actuel, dans lequel ledit faisceau théoriquement le plus fort peut changer au cours du temps ; et

des moyens de surveillance, de manière permanente, d'un canal dudit faisceau théoriquement le plus fort.

**41.** Dispositif selon la revendication 34, dans lequel l'UT (124, 126) comprend :

des moyens de détermination, de manière permanente, de l'emplacement actuel du terminal utilisateur, dans lequel ledit emplacement actuel peut changer au cours du temps ;

des moyens de détermination, de manière permanente, du faisceau théoriquement le plus fort, comme le détermine l'UT en termes de puissance reçue, sur la base dudit emplacement actuel, dans lequel ledit faisceau théoriquement le plus fort peut changer au cours du temps ; et

des moyens de surveillance, de manière permanente, d'un canal dudit faisceau théoriquement le plus fort.

**42.** Dispositif selon la revendication 22, dans lequel l'UT (124, 126) comprend :

des moyens de rappel d'un emplacement précédent de l'UT (124, 126) ;

des moyens de détermination du faisceau théoriquement le plus fort, comme le détermine l'UT en termes de puissance reçue, sur la base dudit emplacement rappelé ; et

des moyens de surveillance d'un canal dudit faisceau théoriquement le plus fort.

**43.** Dispositif selon la revendication 22, dans lequel le dispositif est une passerelle (122) et les moyens de rappel, les moyens de détermination de groupe et les moyens de détermination du faisceau le plus fort sont prévus dans la passerelle (122).

**44.** Terminal d'utilisateur permettant de recevoir une page d'une passerelle (122) dans un système de communications par satellite (100) comportant un ou plusieurs satellites (116, 118), dans lequel chaque satellite (116) produit une pluralité de faisceaux (140-148) et chaque faisceau comprend une pluralité de canaux, et dans lequel les satellites (116, 118) produisent un nombre total de faisceaux m (140 - 152), **caractérisé par le fait que** le terminal d'utilisateur (124, 126) comprend :

des moyens de rappel d'un emplacement (220) du terminal d'utilisateur correspondant à un emplacement pendant lequel le terminal d'utilisateur (124, 126) a précédemment communiqué avec la passerelle (122) ;

des moyens de détermination (220) d'un faisceau théoriquement le plus fort, relativement à la puissance reçue théorique en ce qui concerne l'emplacement rappelé, à partir de ladite pluralité de faisceaux, ledit faisceau théoriquement le plus fort pouvant changer dans le temps ;

des moyens de surveillance (220) d'un canal dudit faisceau théoriquement le plus fort ; et

des moyens de réception (210-216) de la page de la passerelle (122) sur le canal dudit faisceau théoriquement le plus fort.

**45.** Procédé de réception par un terminal utilisateur d'une page provenant d'une passerelle (122) dans un système de communications par satellites (100) ayant un ou plusieurs satellites (116, 118), dans lequel chaque satellite (116) produit une pluralité de faisceaux (140 - 148) et chaque faisceau comprend une pluralité de canaux, et dans lequel les satellites (116, 118) produisent un nombre total de faisceaux m (140 - 152), **caractérisé par le fait que** le procédé comprend les étapes, dans le terminal utilisateur, consistant à :

rappeler un emplacement du terminal utilisateur correspondant à un emplacement pendant lequel le terminal utilisateur (124, 126) a communiqué avec la passerelle (122) ;

déterminer (1004) un faisceau théoriquement le plus fort, relativement à la puissance reçue théorique, en ce qui concerne l'emplacement rappelé, à partir de ladite pluralité de faisceaux, ledit faisceau théoriquement le plus fort pouvant changer dans le temps ;

surveiller (1006) un canal dudit faisceau théoriquement le plus fort ;

recevoir la page de la passerelle (122) sur le canal dudit faisceau théoriquement le plus fort.

FIG. 1A

FIG. 1B

EP 1 177 644 B1

FIG. 2

300

318

SEARCHER
RECEIVER

324

310  314

ANALOG
RECEIVER

316A

DIGITAL DATA
RECEIVER

323

COMBINER
DECODER

316N

DIGITAL DATA
RECEIVER

321

RECEIVE
PROCESSOR

OTHER
CHANNELS

322

BASEBAND
PROCESSING

320

CONTROL
PROCESSOR

OTHER
MODULES

338  340

ANALOG
TRANSMITTER

326

TRANSMIT
MODULATOR

330

TRANSMIT
PROCESSOR

336

SUMMER

328

TRANSMIT
POWER
CONTROLLER

332

PN
GENERATOR

OTHER
TRANSMIT
MODULES

334

FIG. 3

116

412 413

411 404 405 414

403 401 406

410 415

402 407

409 416

408

400

FIG. 4

FIG. 5A

TIME = t2

FIG. 5B

TIME = t₂

TIME = t3

FIG. 6A

FIG. 6B

FIG. 7A

702 — START

704 — RECALL A LOCATION OF THE UT THAT CORRESPONDS TO A KNOWN LOCATION OF THE UT AT TIME $t_1$

706 — DETERMINE A FIRST GROUP ($g_1$) OF BEAMS THAT COVERS THE RECALLED LOCATION OF THE UT AT A TIME $t_2$

708 — DETERMINE A STRONGEST BEAM OF THE FIRST GROUP OF BEAMS AT TIME $t_2$

710 — DETERMINE WHETHER THE STRONGEST BEAM THEORETICALLY HAS A POWER THAT IS AT LEAST A PREDETERMINED AMOUNT OF POWER HIGHER THAN EACH OTHER BEAMS OF THE FIRST GROUP OF BEAMS RELATIVE TO THE RECALLED LOCATION

YES

NO

712 — SEND A PAGE FROM THE GATEWAY TO THE UT ON A CHANNEL OF THE STRONGEST BEAM

714 — DETERMINE A TIME $t_3$ AT WHICH ONE BEAM COVERING THE RECALLED LOCATION WILL THEORETICALLY HAVE A POWER THAT IS AT LEAST THE PREDETERMINED AMOUNT OF POWER HIGHER THAN ANY OTHER BEAM COVERING THE RECALLED LOCATION

716 — SEND A PAGE FROM THE GATEWAY TO THE UT ON A CHANNEL OF THE ONE BEAM AT TIME $t_3$

FIG. 8

722

START

724

DETERMINE AN ACTUAL
STRONGEST BEAM WITH
RESPECT TO A CURRENT
LOCATION

726

MONITOR A CHANNEL OF
THE ACTUAL STRONGEST
BEAM DETERMINED IN
STEP 724

FIG. 7B

902

START

904

DETERMINE A THEORETICALLY
STRONGEST BEAM WITH RESPECT
TO A CURRENT LOCATION

906

MONITOR A CHANNEL OF THE
THEORETICALLY STRONGEST
BEAM DETERMINED IN STEP 904

FIG. 9

1002

START

1004

DETERMINE A THEORETICALLY
STRONGEST BEAM WITH RESPECT
TO A RECALLED LOCATION

1006

MONITOR A CHANNEL OF THE
THEORETICALLY STRONGEST
BEAM DETERMINED IN STEP 904

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4901307 A
- US 36857095 A
- US 5552795 A
- US 5506886 A
- US 08723723 B
- US 5126748 A
- US 08732725 B
- US 73272296 A
- US 72375196 A